# EUROPEAN PATENT SPECIFICATION

(11) **EP 3 361 387 B1**
(45) Date of publication and mention of the grant of the patent: **03.05.2023**
(21) Application number: 16856851.7
(22) Date of filing: 14.10.2016
(51) Int. Cl.: G06F 13/28, G06F 12/109, G06F 12/02

(54) **DATA TRANSMISSION METHOD, EQUIPMENT AND SYSTEM**
DATENÜBERTRAGUNGSVERFAHREN, VORRICHTUNG UND SYSTEM
SYSTÈME, ÉQUIPEMENT ET PROCÉDÉ DE TRANSMISSION DE DONNÉES

(30) Priority: 21.10.2015 CN 201510694821
(43) Date of publication of application: 15.08.2018
(73) Proprietor: Huawei Technologies Co., Ltd., Longgang District Shenzhen, Guangdong 518129 (CN)
(72) Inventor: WANG, Yijing, Shenzhen Guangdong 518129 (CN); MIAO, Xie, Shenzhen Guangdong 518129 (CN)
(74) Representative: Huawei European IPR
(86) International application number: PCT/CN2016/102163
(87) International publication number: WO 2017/067420

(56) References cited:
- CN-A- 1 622 071
- CN-A- 101 080 701
- CN-A- 102 521 054
- CN-A- 104 199 740
- US-A- 5 887 134
- US-A1- 2006 085 569
- US-A1- 2007 150 654
- US-A1- 2014 089 608
- US-A1- 2015 277 763

## Description

### TECHNICAL FIELD

The present invention relates to the field of data transmission, and in particular, to a method and device for performing DMA data transmission between an I/O device and at least one host device, and a data transmission system.

### BACKGROUND

In a distributed environment, in order to improve the scalability and utilization of an I/O device, there generally exists a scenario in which multiple hosts share an I/O device resource. When multiple hosts share an I/O resource, overall use efficiency of the I/O resource can be improved, and a host may dynamically apply for and release the resource according to a requirement. In addition, hosts may transmit data to each other by using the shared I/O resource, so as to synchronize data information and statuses on different hosts.

During data transmission, the I/O device generally uses a direct memory access (Direct Memory Access, DMA for short) technology to transmit data on the I/O device, thereby implementing background batch data transmission independent of a CPU. In a DMA operation, a host assigns a DMA memory address space for the DMA operation, and the I/O device directly performs data read/write in the DMA memory address space, thereby completing data transmission in a DMA manner. The DMA operation is implemented by using a DMA packet. The I/O device sends a DMA packet to the host. The DMA packet includes a DMA address, and the DMA address is in the DMA memory address space that is assigned by the host for the DMA operation. According to the DMA address in the DMA packet, the I/O device may directly read data from or write data into the DMA memory address space of the host. Specifically, for example, when the host performs a write operation on the I/O device, the DMA packet is a read packet for a memory, and data is carried in one or more command completion packets in response to the read packet and is copied from the memory to the I/O device. When the host performs a read operation on the I/O device, according to a size of data that needs to be copied, the DMA packet generated by the I/O device is one or more write packets carrying the data that needs to be copied. The write packet reaches a DMA memory address space of a target host, and data load in the packet is copied into a corresponding memory space. In the DMA operation, a data transmission process does not need to involve a CPU of a host, and therefore, high-speed independent read/write of host data by an I/O device is implemented.
US patent US20150277763 discloses methods and systems for implementing improved partitioning and virtualization in a multi-host environment. Multiple devices, including CPUs and peripherals, coupled with a system via an interconnect matrix/bus are associated with a shared memory logically partitioned into multiple domains. A first domain is associated with a first set of the devices and a second domain is associated with a second set of the devices. A single shared virtual map module (VMM), maps a memory access request to an appropriate partitioned domain of the memory to which the originating device has been assigned based on an identifier associated with the device and further based on the type of memory access. The VMM causes a memory controller to perform memory access on behalf of the device by outputting a physical address based on the identified domain and the virtual address specified by the request.
US 5887134A discloses that in a cluster of computer nodes, each node has network interface and at least one processor. Transmission of a multipart message from a first node to a second node is initiated by sending to a network interface of the first node a sequence of PIO store and DMA store commands, each PIO store and DMA store command specifying a respective component of the multipart message to be stored in a respective specified memory mapped location in the second node, the sequence of the PIO store and DMA store commands corresponding to a predefined message component order. The first node' s network interface packetizes the sequence of PIO and DMA commands to generate an ordered stream of data transfer packets whose order corresponds to the predefined message component order, and transmits the ordered stream of data transfer packets to the second node so as to store the respective components of the multipart message in their respective specified memory locations in the second node in the predefined message component order.

When multiple hosts share a same I/O device, each host has an independent DMA memory address space, and for the I/O device, there may be a conflict among multiple DMA memory address spaces. Consequently, the DMA operation cannot be performed. An existing technology of sharing an I/O resource by multiple hosts cannot effectively resolve a problem of accessing a same I/O device by multiple hosts in a high-speed connection. For example, in an existing technology, although hosts can access an external extended I/O resource at a high speed, when a host uses an I/O device, the I/O device is still in an exclusive state, that is, one I/O device can be accessed by only one host at a time. For another example, in another existing technology, although multiple hosts can share a same network I/O device by using an IP technology, an IP network causes an extra performance overhead loss due to processing at a network protocol layer; moreover, the IP network is limited by a network bandwidth, and has a relatively large delay, and therefore is unsuitable for a short-range high-performance I/O data transmission application.

### SUMMARY

In view of this, the present invention provides a method and device for performing DMA data transmission between an I/O device and at least one host device, and a data transmission system, so as to enable multiple hosts to share a same I/O device in a DMA data transmission manner, thereby implementing efficient data transmission and synchronization between the multiple hosts and the shared I/O device.

The invention is set out in the appended set of claims.

According to a second aspect, the present invention provides a data transmission method, where the method is applied to a computer system in which multiple hosts share one or more input/output I/O devices, the one or more I/O devices access respective DMA memory addresses of the multiple hosts in a direct memory access DMA manner, and the DMA memory addresses are mapped, in a one-to-one manner, to virtual addresses in a global virtual address space, and the method comprises: obtaining a DMA packet sent by the I/O device, wherein the DMA packet carries a DMA virtual address, and the DMA virtual address is a virtual address in the global virtual address space; determining, according to a correspondence among DMA virtual addresses, DMA memory addresses, and hosts, a DMA memory address and a target host that correspond to the DMA virtual address by querying a correspondence table, wherein the DMA memory address is a DMA memory address mapped to the DMA virtual address, and the target host is a host to which the DMA memory address mapped to the DMA virtual address belongs, and the correspondence among DMA virtual addresses, DMA memory addresses, and hosts comprises: the DMA memory addresses of the multiple hosts form multiple DMA memory address intervals, and each host corresponds to one or more DMA memory address intervals; the global virtual address space comprises multiple non-overlapping virtual address intervals, the multiple virtual address intervals correspond to the multiple DMA memory address intervals in a one-to-one manner, and virtual addresses in a virtual address interval correspond to DMA memory addresses in a corresponding DMA memory address interval in a one-to-one manner; modifying the DMA virtual address in the DMA packet to the DMA memory address mapped to the DMA virtual address; and sending the modified DMA packet to the target host, wherein the determining, according to a correspondence among DMA virtual addresses, DMA memory addresses, and hosts, a DMA memory address and a target host that correspond to the DMA virtual address comprises: determining, according to a virtual address interval to which the DMA virtual address belongs, a DMA memory address interval corresponding to the virtual address interval; and determining, according to the DMA memory address interval, a host corresponding to the DMA memory address interval and a DMA memory address that is in the DMA memory address interval and that is mapped to the DMA virtual address. It can be seen that, by using the computer system, the I/O device can perform a DMA operation on multiple hosts by using a DMA packet carrying a DMA virtual address. Because DMA virtual addresses are located in a same global virtual address space, in comparison with the prior art, no conflict occurs between DMA memory addresses, and therefore, multiple hosts can share a same I/O device.

The DMA memory addresses of the hosts form one or more DMA memory address intervals, and in the global virtual address space, there are virtual address intervals that correspond, in a one-to-one manner, to the memory address intervals of the hosts. After the DMA packet carrying the DMA virtual address is obtained, a corresponding memory address interval is found according to a virtual address interval to which the DMA virtual address belongs, so as to determine a DMA memory address and a host to which the memory address belongs. Because a correspondence among the virtual addresses, the memory addresses, and the hosts is implemented by using the memory address intervals and the virtual address intervals, complexity of the correspondence is reduced.

In a possible design, registration information of one or more hosts among the multiple hosts is obtained, where the registration information includes an identifier ID and a DMA memory address of the corresponding host. A virtual address is assigned to the host according to the DMA memory address of the host, and is added or updated to the correspondence.

In a possible design, registration information of one or more hosts among the multiple hosts is obtained, where the registration information includes an identifier ID and a DMA memory address interval of the corresponding host. One or more virtual address intervals are assigned to the host according to one or more DMA memory address intervals of the host, and are added or updated to the correspondence.

In a possible design, after the correspondence among DMA virtual addresses, DMA memory addresses, and hosts is updated, update information is sent to a host, to instruct the host to synchronously update the correspondence that is stored on the host and that is among DMA virtual addresses, DMA memory addresses, and hosts.

In a possible design, it is determined, according to an operation type of the DMA packet and a permission requirement of the target host, that the DMA operation to be performed on the target host meets the permission requirement, and the packet is modified and sent only when the DMA operation meets the permission requirement.

In a possible design, the DMA packet further includes a permission identifier; it is determined, according to the operation type of the DMA packet, the permission identifier, and the permission requirement of the target host, whether the permission requirement is met; and the packet is modified and sent only when the permission requirement is met. By means of permission control, security of the transmission system can be improved, and forwarding to a particular host is implemented.

In a possible design, a query command that is sent by a host and that includes a DMA memory address may be received; a DMA virtual address that is in the global virtual address space and that corresponds to the DMA memory address of the host is obtained according to the correspondence among DMA virtual addresses, DMA memory addresses, and hosts; and then the DMA virtual address is sent to the host by using a return packet.

In a possible design, a DMA operation starting request sent by any host to the I/O device may be obtained, where the DMA operation starting request includes a DMA memory address of another host, to instruct the I/O device to perform a DMA operation on the another host. A DMA virtual address corresponding to the DMA memory address is determined according to the correspondence among DMA virtual addresses, DMA memory addresses, and hosts, the DMA memory address in the operation command is modified to the DMA virtual address, and the operation command is sent to the I/O device.

According to a third aspect, the present invention provides a data transmission method, where the method is applied to sharing of one or more input/output I/O devices by multiple hosts by using a data transmission device, the one or more I/O devices access respective DMA memory addresses of the multiple hosts in a direct memory access DMA manner, and the DMA memory addresses are mapped, in a one-to-one manner, to virtual addresses in a global virtual address space. DMA address information of a target host is obtained; a DMA operation starting request is sent according to the DMA address information of the target host, where the DMA operation starting request includes a DMA address, to instruct the I/O device to perform a DMA operation on a DMA virtual address in the global virtual address space, and the DMA virtual address is a DMA virtual address obtained by mapping a DMA memory address of the target host into the global virtual address space.

In a possible design, the DMA address information is a DMA memory address. A DMA operation starting request including the DMA memory address of the destination host is sent to the data transmission device, to instruct the data transmission device to modify the DMA address in the DMA operation starting request from the DMA memory address of the target host to a corresponding DMA virtual address in the global virtual address space, and forward the DMA operation starting request to the target host.

In a possible design, the DMA address information is a DMA memory address, a DMA virtual address of DMA of the target host is obtained according to a correspondence among DMA virtual addresses, DMA memory addresses, and hosts, and the DMA operation starting request including the DMA virtual address is sent to the I/O device.

In a possible design, the DMA address information is a DMA virtual address of the destination host, and a DMA operation starting request including the DMA virtual address is sent to the I/O device, to instruct the I/O device to perform a DMA operation on the target host.

In a possible design, a host assigns a DMA memory address, and sends registration information including an identifier ID of the host and the DMA memory address of the host.

In a possible design, a host assigns a DMA memory address interval, and sends registration information, where the registration information includes an identifier ID of the host and the DMA memory address interval of the host.

In a possible design, a host obtains update information including a correspondence, which needs to be updated, among a DMA virtual address, a DMA memory address, and a host, and adds or updates the correspondence to the existing correspondence among DMA virtual addresses, DMA memory addresses, and hosts according to the update information.

According to a fourth aspect, the present invention provides a data transmission device, where the data transmission device is separately connected to the multiple hosts and the one or more input/output I/O devices, the multiple hosts share the one or more I/O devices, the one or more I/O devices access respective DMA memory addresses of the multiple hosts in a direct memory access DMA manner, the apparatus has corresponding functions for implementing the data transmission devices in the first aspect in the foregoing method and functions of the corresponding method in the second aspect. The functions may be implemented by hardware, or may be implemented by hardware executing corresponding software. The hardware or software includes one or more modules corresponding to the foregoing functions.

According to a fifth aspect, the present invention provides a data transmission device, where the device is configured to share one or more input/output I/O devices, and the apparatus has corresponding functions for implementing the host in the first aspect in the foregoing method and functions of the corresponding method in the third aspect. The functions may be implemented by hardware, or may be implemented by hardware executing corresponding software. The hardware or software includes one or more modules corresponding to the foregoing functions.

According to a sixth aspect, the present invention provides a data transmission device, where the data transmission device is separately connected to the multiple hosts and a one or more input/output I/O devices, the multiple hosts share the one or more I/O devices, and the one or more I/O devices access respective DMA memory addresses of the multiple hosts in a direct memory access DMA manner; a structure of the apparatus includes a processor, where the processor is configured to support the apparatus to execute corresponding functions of the data transmission devices in the first aspect and the corresponding method in the second aspect, and the structure of the apparatus further includes a transmitter and a receiver that are configured to send or receive an instruction or information exchanged with another device by using the corresponding functions of the data transmission devices in the first aspect and the corresponding method in the second aspect. The apparatus may further include a storage, where the storage is configured to be coupled with the processor, and the storage saves necessary program instructions and data.

According to a seventh aspect, the present invention provides a data transmission device, where the device is configured to share one or more input/output I/O devices, a structure of the apparatus includes a processor, and the processor is configured to support the apparatus to execute corresponding functions of the host in the first aspect and the corresponding method in the third aspect. The structure of the apparatus further includes a transmitter and a receiver that are configured to send or receive an instruction or information exchanged with another device by using the corresponding functions of the data transmission devices in the first aspect and the corresponding method in the second aspect. The apparatus may further include a storage, where the storage is configured to be coupled with the processor, and the storage saves necessary program instructions and data.

It can be seen that, in the present invention, a DMA packet sent by an I/O device is obtained, a DMA virtual address in the DMA packet is modified to a DMA memory address of a target host of the DMA operation, and the modified DMA packet is sent to the target host; the I/O device can perform a DMA operation on multiple hosts by using a DMA packet including a DMA virtual address. Because DMA virtual addresses correspond, in a one-to-one manner, to DMA memory addresses on hosts, and are located in a same global virtual address space, in comparison with the prior art, no conflict occurs between DMA memory addresses. Because multiple hosts share a same I/O device, I/O resources are saved, and utilization of the I/O device is improved.

In addition, because multiple hosts can connect to a same I/O device simultaneously and perform data transmission, data transmission between hosts may be implemented by using a DMA operation of the I/O device, and data transmission does not need to be directly performed between hosts. A link bus between a host and an I/O device has features of a high bandwidth and a low delay, and a CPU of the host does not need to intervene in data transmission in a DMA operation; therefore, network transmission performance and synchronization performance are improved.

In addition, because permission management is performed on a DMA operation by using a DMA packet, reliability and security of data transmission on a whole network are improved. Moreover, by means of permission control, network use scenarios may also be expanded, and different DMA operations are managed by category, to implement more complex network deployment and transmission manners.

The claimed invention corresponds to the second and fourth aspects above. A first aspect corresponds to a non-claimed embodiment. The third and fifth to seventh aspects above correspond as well to non-claimed embodiments.

### BRIEF DESCRIPTION OF DRAWINGS

To describe the technical solutions of the present invention more clearly, the following briefly introduces the accompanying drawings showing embodiments of the present invention. Apparently, the accompanying drawings in the following description show some preferred embodiments of the present invention only.
FIG. 1 is a schematic diagram of a correspondence between DMA memory address intervals and virtual address intervals according to an embodiment of the present invention;
FIG. 2 is a schematic diagram of a network topology environment of a data transmission device according to an embodiment of the present invention;
FIG. 3 is a schematic diagram of a hardware interconnect architecture of a network transmission device according to an embodiment of the present invention;
FIG. 4 is a schematic flowchart of a first data transmission method according to an embodiment of the present invention;
FIG. 5 is a schematic flowchart of a specific implementation manner of a data transmission method according to an embodiment of the present invention;
FIG. 6A is a schematic flowchart of a second data transmission method according to an embodiment of the present invention;
FIG. 6B is another schematic flowchart of a second data transmission method according to an embodiment of the present invention;
FIG. 7 is a schematic flowchart of a third data transmission method according to an embodiment of the present invention;
FIG. 8 is a schematic flowchart of an implementation process of performing permission control on a packet according to an embodiment of the present invention;
FIG. 9 is a schematic flowchart of a fourth data transmission method according to an embodiment of the present invention;
FIG. 10 is a schematic structural diagram of a data transmission device according to an embodiment of the present invention;
FIG. 11 is another schematic structural diagram of a data transmission device according to an embodiment of the present invention;
FIG. 12 is a schematic flowchart of a data transmission system according to an embodiment of the present invention;
FIG. 13 is a schematic flowchart of another data transmission system according to an embodiment of the present invention;
FIG. 14 is a schematic structural diagram of another data transmission device according to an embodiment of the present invention; and
FIG. 15 is a schematic structural diagram of still another data transmission device according to an embodiment of the present invention.

### DESCRIPTION OF EMBODIMENTS

Embodiments of the present invention provide a method for data transmission between multiple hosts and an I/O device, to implement data transmission, by means of DMA, between multiple hosts and an I/O device, and reduce bandwidth occupation and a data delay among the multiple hosts and between the hosts and the I/O device, so as to improve data transmission performance and stability.

The embodiments of the present invention further provide a corresponding device and a data transmission system, which are separately described in detail below.

The following clearly describes the technical solutions in the embodiments of the present invention with reference to the accompanying drawings in the embodiments of the present invention. Apparently, the described embodiments are merely some but not all of the embodiments of the present invention.

To make the embodiments of the present invention easy to understand, some terms introduced in descriptions of the embodiments of the present invention are first described herein.

Global virtual address space: In the technology of the present invention, multiple hosts share a same I/O device, and as explained in the background, DMA memory addresses of these hosts have a conflict on the I/O device. The global virtual address space is independent of all hosts, and in this space, a user is an external I/O device. A space size of the global virtual address space is greater than or equal to a sum of DMA memory addresses of all hosts connected to the I/O device. Therefore, DMA memory addresses of different hosts may be mapped into the global virtual address space. Because DMA memory addresses of different hosts are mapped to a same global virtual address space, a problem that DMA addresses of different hosts have a conflict when being used on a same I/O device is resolved.

DMA virtual address: The DMA virtual address is a memory address in the global virtual address space, and the DMA virtual address corresponds to a DMA memory address of a host. In the present invention, a DMA address in a DMA packet that is sent by the I/O device when the I/O device performs a DMA operation on a host is not a DMA memory address on the host but a DMA virtual address. The I/O device performs a DMA operation on the global virtual address space by using a DMA virtual address, and therefore, when the I/O device is connected to multiple hosts, the DMA address conflict described in the background does not occur. Besides, in the present invention, a DMA virtual address in a DMA packet is translated into a DMA memory address on a corresponding host, thereby implementing DMA data transmission between the I/O device and multiple hosts.

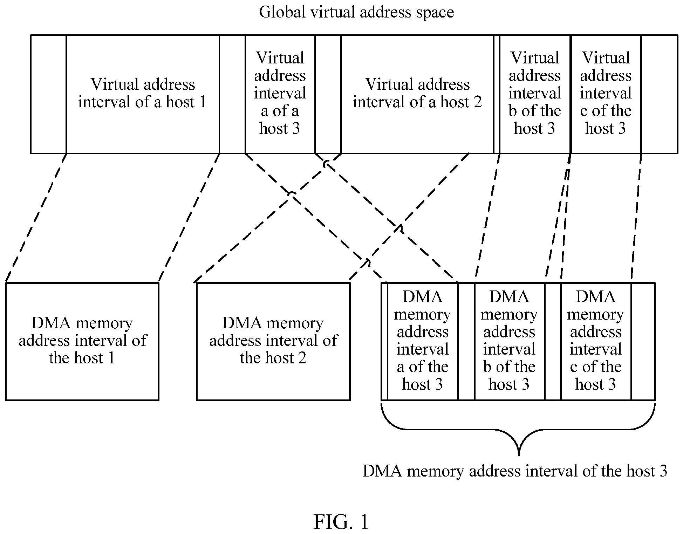

Virtual address interval: In a possible scenario, a DMA memory address in a host is continuous, that is, one or more DMA memory address intervals are formed, and DMA memory address intervals of different hosts are mapped into the global virtual address space. Each DMA memory address interval corresponds to a virtual address interval in the global virtual address space. With reference to FIG. 1, a correspondence between DMA memory intervals of hosts and virtual address intervals can be understood more intuitively. As shown in FIG. 1, DMA memory address intervals of a host 1, a host 2, and a host 3 respectively correspond to virtual address intervals of the host 1, the host 2, and the host 3 in the global virtual address space. DMA memory addresses of the host 1 and the host 2 are each in a continuous DMA memory address interval, and therefore, in the global virtual address space, a continuous virtual address interval is obtained by mapping. DMA memory addresses of the host 3 are distributed in three DMA memory address intervals, and different DMA memory address intervals are discontinuous. Therefore, the three DMA memory address intervals are mapped to three virtual address intervals respectively.

The virtual address interval is located in the global virtual address space, the size of the virtual address interval is the size of the DMA memory address interval of the host, so that DMA virtual addresses in the virtual address interval can correspond, in a one-to-one manner, to DMA memory addresses in the DMA memory address interval, and the global virtual address space is greater than or equal to a sum of all virtual address intervals.

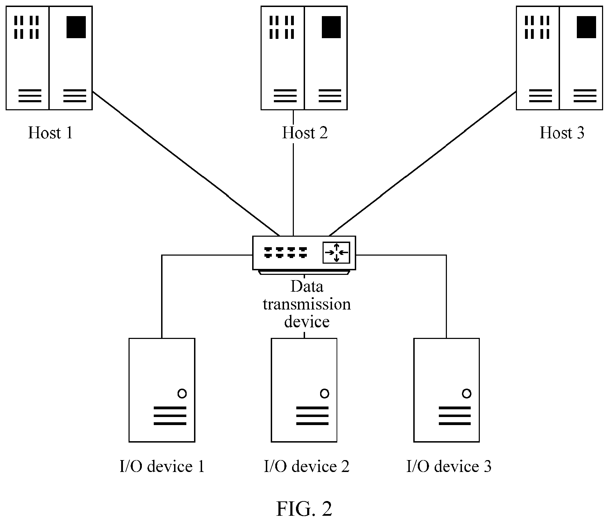

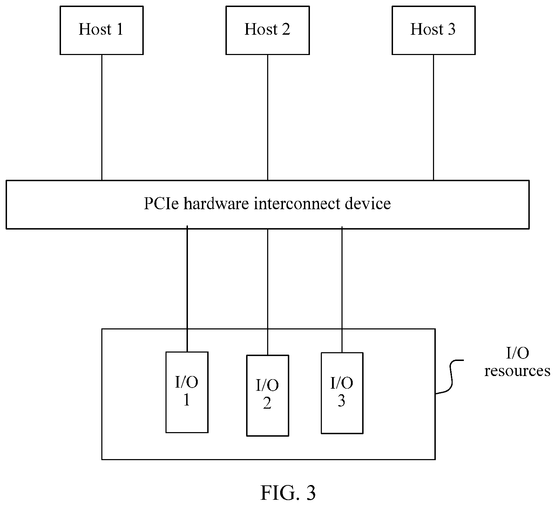

The present invention is applied to a distributed environment in which an I/O device is connected to at least one host device, and in the distributed environment, in order to improve scalability and utilization of the I/O device, there generally exists a scenario in which multiple hosts share an I/O device resource. When multiple hosts share an I/O resource, overall use efficiency of the I/O resource can be improved, and a host may dynamically apply for and release the resource according to a requirement. FIG. 2 describes a network topology environment of the present invention; a host 1, a host 2, and a host 3 are connected to an I/O device 1, an I/O device 2, and an I/O device 3 by using a data transmission device. FIG. 3 describes a hardware interconnect architecture in implementation of the present invention. In this architecture, a host is directly connected to an external PCIe hardware interconnect device by using a Peripheral Component Interconnect Express (Peripheral Component Interconnect Express, PCIe) link, and the PCIe hardware interconnect device is connected to a PCIe device. In the embodiments of the present invention, the data transmission devices may implement functions of the PCIe hardware interconnect device. The PCIe hardware interconnect architecture is a non-PCIe specification implementation, and by means of PCIe data packet forwarding of an interconnect device, multiple hosts can access a same PCIe device. For example, the host 1, the host 2, and the host 3 in the figure share the I/O device. The hardware platform provides a capability so that different hosts can access a same external PCIe device. Certainly, based on the idea of the present invention, a network topology environment and a hardware interconnect architecture to which the present invention is applied may have multiple variations and expansions, so as to implement data transmission between the I/O device and at least one host in the present invention.

Because the present invention is applied to DMA data transmission between an I/O device and at least one host device, to facilitate understanding of the present invention, a process of a DMA operation in the prior art is briefly described.

The DMA operation includes a DMA write operation and a DMA read operation, the DMA write operation may implement copying data from an I/O device into a DMA memory address of a target host, and the DMA read operation may be used to copy data from a DMA memory address of a target host into an I/O device.

The DMA write operation includes the following steps:
1. I/O device driver software generates an I/O command package according to a received DMA operation starting request, where the I/O command package includes instruction information for copying, in a DMA manner, data in an I/O device to memory, a source data address on the I/O device, and a target memory DMA address.
2. The I/O device receives the command package, and generates one or more DMA write packets according to a volume of the data that needs to be copied, where a target address of the packet is the memory DMA address, and the packet carries the data to be copied.
3. Send the DMA write packet to a corresponding channel (which is generally a PCIe link).
4. When the DMA write packet reaches a physical memory space of a host, copy data load in the packet to the corresponding target memory DMA address.

The DMA read operation includes the following steps:
1. I/O device driver software generates an I/O command package according to a received DMA operation starting request, where the I/O command package includes instruction information for copying, in a DMA manner, memory data to an I/O device, a target address on an I/O device, and a DMA address of memory source data (in the present invention, the target memory DMA address in the foregoing write operation and the DMA address of the memory source data in the read operation are collectively referred to as a DMA address).
2. The I/O device receives the command package, and generates a memory read packet (in the present invention, the foregoing DMA write packet and the DMA read packet are collectively referred to as a DMA packet), where a target address of the packet is the DMA address of the memory source data, and a volume of data to be read is specified.
3. Send the memory read packet to a channel (which is generally a pcie link) corresponding to a target host.
4. A memory controller of the host receives the DMA read packet, generates a completion packet, and fills load of the completion packet with specified memory data, where the completion packet is returned to an I/O device according to an I/O device ID in the DMA read packet, thereby copying the data to the I/O device. (It should be noted that, the completion packet is not the DMA packet in the present invention.)

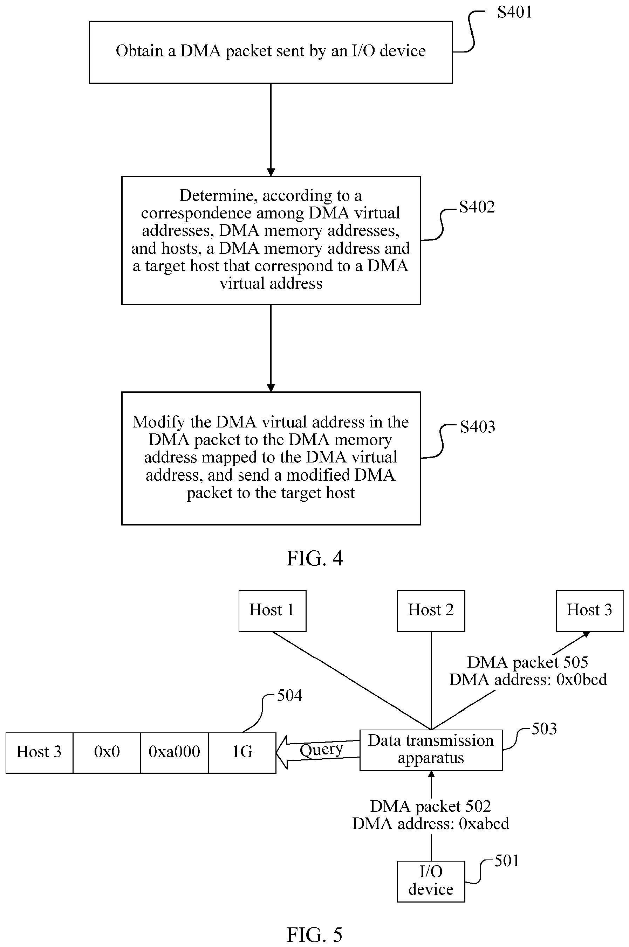

Referring to FIG. 4, FIG. 4 is a schematic flowchart of a first data transmission method according to an embodiment of the present invention. It should be noted that, the method is applied to a computer system in which multiple hosts share one or more input/output I/O devices, the one or more I/O devices access respective DMA memory addresses of the multiple hosts in a direct memory access DMA manner, and the DMA memory addresses are mapped, in a one-to-one manner, to virtual addresses in a global virtual address space. An entity performing the method may have multiple implementation manners in a network topology. For example, the entity performing the method may be an independent data transmission device, or a data transmission module integrated on an I/O device, or a data transmission device that is integrated on a host and that is connected to another host and an I/O device. The method in this embodiment of the present invention may include the following steps:

S401: Obtain a DMA packet sent by an I/O device, where the DMA packet carries a DMA virtual address, and the DMA virtual address is a virtual address in the global virtual address space.

As described in the background, a DMA operation performed by an I/O device on a host is implemented by using a DMA packet, that is, a DMA address in the DMA packet is a DMA memory address of a destination host, and read/write is performed, according to the DMA address, on data that is stored by the target host at the DMA memory address. In this embodiment of the present invention, a DMA address in the DMA packet is a virtual address in the global virtual address space, and as described above, the virtual address corresponds to the DMA memory address of the target host. For the I/O device, when the I/O device performs a DMA operation on the DMA memory address of the target host by using the DMA packet, a read/write operation is actually performed on the virtual address corresponding to the DMA memory address of the target host. Because virtual address intervals are located in a same global virtual address space, when the I/O device performs a DMA operation on multiple hosts connected thereto, no conflict occurs between DMA memory address intervals.

S402: Determine, according to a correspondence among DMA virtual addresses, DMA memory addresses, and hosts, a DMA memory address and a target host that correspond to the DMA virtual address, where the DMA memory address is a DMA memory address mapped to the DMA virtual address, and the target host is a host to which the DMA memory address mapped to the DMA virtual address belongs.

DMA virtual addresses, hosts, and DMA memory addresses of the hosts are in a one-to-one correspondence. Therefore, according to the DMA virtual address in the DMA packet, the DMA memory address and the target host that correspond to the DMA virtual address may be determined. There may be multiple obtaining manners, including but not limited to the following manners: querying an address translation table according to the DMA virtual address in the DMA packet, to obtain the DMA memory address of the target host; or sending a query instruction to another device, and obtaining the returned DMA memory address of the target host; or translating the DMA virtual address into the DMAmemory address of the target host according to a preset address translation rule.

For example, a query instruction may be sent to another device, such as a host on which a management system is located or another device having a DMA address translation function. The query instruction includes a DMA virtual address to be queried. After receiving the query instruction, the device finds the DMA memory address corresponding to the DMA virtual address, and returns the DMA memory address by using an instruction. After the returned instruction is obtained, the DMA memory address corresponding to the DMA virtual address can be obtained.

For another example, the DMA virtual address may be translated into the DMA memory address of the target host according to a preset address translation rule. For example, in a translation manner that can be listed, the DMA memory address of the target host is in an interval, and the interval is of a uniform size, such as 1 G. A corresponding interval is also assigned in the global virtual address space, and the interval includes a virtual address corresponding to the DMA memory address of the target host. From a start address of the global virtual address space, continuous arrangement is performed sequentially according to host numbers; in this case, a quotient obtained by dividing a memory size of a difference between the DMA virtual address and the start address of the global virtual address space by the size of the memory interval is a number of the target host, and a remainder is a size from a start address of the memory interval of the target host to the DMA memory address, thereby obtaining the DMA memory address of the target host.

According to the invention, the correspondence among DMA virtual addresses, DMA memory addresses, and hosts includes: the DMA memory addresses of the multiple hosts form multiple DMA memory address intervals, and each host corresponds to one or more DMA memory address intervals; the global virtual address space includes multiple non-overlapping virtual address intervals, the multiple virtual address intervals correspond to the multiple DMA memory address intervals in a one-to-one manner, and virtual addresses in a virtual address interval correspond to DMA memory addresses in a corresponding DMA memory address interval in a one-to-one manner.

With reference to FIG. 1 and the foregoing description about the virtual address interval, the correspondence in this implementation manner can be understood.

According to the invention, determining, according to the correspondence, the DMA memory address and the target host that correspond to the DMA virtual address is implemented by querying a correspondence table.

In a case, the correspondence table may directly include a correspondence among DMA memory addresses, DMA virtual addresses, and corresponding hosts. Therefore, according to any one of the three elements, the other two elements corresponding to the element can be found.

In an implementation manner, the address translation table may include fields such as a host ID, a DMA memory address of a host, and a DMA virtual address; during table lookup, according to the DMA virtual address, the corresponding DMA memory address and the corresponding host can be directly obtained. The address herein may be a specific address, or may be an address interval. In this implementation manner, both memory addresses in the DMA memory address interval and virtual addresses in the DMA virtual address interval may be discontinuous. In another implementation manner, the address translation table may include fields such as a host ID, a start address of a DMA memory address interval of a host, a start address of a virtual address interval, and an interval size. During table lookup, according to the virtual address, the start address of the virtual address interval, and the interval size, a difference between the virtual address and the start address of the virtual address interval can be obtained, and according to the difference and the start address of the DMA memory address interval of the host, the DMA memory address can be obtained. This implementation manner is used in a case in which virtual address intervals and memory address intervals are continuous, and can effectively reduce a quantity of entries in the address translation table.

The address translation table is located on address translation module hardware, and is implemented by a private register or device memory, or may be located in memory of a management system. When the address translation table is located in a private register or device memory, query may be performed by directly accessing the address translation table; when the address translation table is located in memory of a management system, and the management system is located in a non-local device, a query instruction carrying a virtual address may be sent, and a return instruction that is fed back and that carries a DMA memory address is received, thereby obtaining the DMA memory address.

The address translation table may be preset manually, or the address translation table is obtained by means of synchronization with another device on the network. In another implementation manner, the address translation table may be automatically generated or updated in the following manner: obtaining registration information of a host, where the registration information includes an identifier ID of the host and a DMA memory address interval of the host; assigning a virtual address interval to the host according to the DMA memory address interval of the host, where the virtual address interval is located in the global virtual address space, and addresses in the virtual address interval correspond to addresses in the DMA memory address interval of the host; adding a correspondence among the host ID, the DMA memory address of the host, and the virtual address interval of the host to the address translation table, or updating an existing correspondence of the host in the address translation table by using the correspondence. The registration information of the host may be sent, to the device performing this method, by the host after the host is connected to the network, or the registration information of the host connected to the network may be sent, by using the management system, to the device performing this method. The memory address interval of the host may be expressed by using a start address of the memory address and an interval size, or may be expressed by using a set of specific continuous or discontinuous addresses or address intervals. Assigning a virtual address interval to the host is assigning, according to the size of the memory address interval of the host, a virtual address interval of a corresponding size, and adding the virtual address interval to the global virtual address space, or replacing an existing virtual address interval of the host in the global virtual address space with the virtual address interval. It can be understood that, when the virtual address interval is assigned, it should be ensured that virtual address intervals and memory address intervals of hosts are in a one-to-one correspondence.

In an implementation manner, adding or modification may be performed on the correspondence among DMA virtual addresses, DMA memory addresses, and hosts in the following manner: obtaining registration information of one or more hosts in the multiple hosts, where the registration information includes an identifier ID and a DMA memory address of the corresponding host; assigning a virtual address to the host according to the DMA memory address of the host, where the virtual address is in the global virtual address space, and the virtual address corresponds, in a one-to-one manner, to the DMA memory address of the host; adding or updating a correspondence among the host ID, the DMA memory address of the host, and the virtual address of the host to the correspondence among DMA virtual addresses, DMA memory addresses, and hosts.

In another implementation manner, when the correspondence includes a virtual address interval or a memory address interval, adding or modification is performed on the correspondence among DMA virtual addresses, DMA memory addresses, and hosts in the following manner: obtaining registration information of one or more hosts in the multiple hosts, where the registration information includes an identifier ID and a DMA memory address interval of the corresponding host; assigning one or more virtual address intervals to the host according to one or more DMA memory address intervals of the host, where the virtual address interval is in the global virtual address space, the one or more virtual address intervals correspond, in a one-to-one manner, to the one or more DMA memory address intervals of the host, and virtual addresses in a virtual address interval correspond to DMA memory addresses in a corresponding DMA memory address interval in a one-to-one manner; adding or updating a correspondence among the host ID, the DMA memory address interval of the host, and the virtual address interval of the host to the correspondence among DMA virtual addresses, DMA memory addresses, and hosts.

In an implementation manner, after the correspondence among DMA virtual addresses, DMA memory addresses, and hosts is updated, update information is sent to a host, to instruct the host to synchronously update the correspondence that is stored on the host and that is among DMA virtual addresses, DMAmemory addresses, and hosts.

It can be understood that, the update information may be actively sent to a host after the address translation table is updated. Alternatively, after a query command sent by a host is received, it is determined whether the correspondence is updated, and if the correspondence is updated, the update information is sent to the host. The update information may be sent to all the hosts, or sent to some specific hosts, or sent to a host on which the management system is located.

It can be understood that, the update of the correspondence may be completed by using the data transmission device, or completed by using the management system on the network, or completed by any host. A specific implementation manner of creating or updating a correspondence is listed below. In this implementation manner, the correspondence is stored in an address translation table, update of the address translation table is completed by a host on the network, and an updated address translation table is synchronized to another device. The host communicates with a data transmission device and an I/O device by using a PCIe bus. This implementation manner includes the following steps:
a) The host enumerates PCIe device objects of the data transmission device.
b) The host discovers, by means of enumeration, a PCIe device shared by a remote end.
c) Obtain an ID of the local host by accessing the data transmission device.
d) The host uses a DMA address of the local host and an ID of the I/O device as an input, to assign a virtual address interval.
e) Wait till an assignment action is completed, and obtain a new global virtual address space.
f)Create or update an address translation table in local memory of the host according to the foregoing information.
g) Initialize interruption information in the data transmission device, if an entry of the address translation table is updated subsequently, inform a current host by means of an interruption, and update copy information in the host.
h) If an I/O device is added or deleted, or the current host is shut down, related information needs to be updated to the global data transmission device first, and the data transmission device informs, by means of an interruption, other hosts that are concerned about the information.

S403: Modify the DMA virtual address in the DMA packet to the DMA memory address mapped to the DMA virtual address, and send the modified DMA packet to the target host.

In the foregoing step, when the DMA memory address is obtained, a host to which the DMA memory address belongs may also be obtained, so that the modified DMA packet is sent to the host. Because the DMA operation is initiated or performed by using the DMA packet, when the DMA packet sent by the I/O device is sent to the target host, the I/O device may perform the DMA operation on the target host.

With reference to FIG. 5, FIG. 5 is a specific implementation manner of this embodiment. A data transmission device 503 obtains a DMA packet 502 sent by an I/O device 501, where a DMA address in the DMA packet 502 is a DMA virtual address 0xabcd, and the virtual address is in a global virtual address space. A correspondence is stored by using an address translation table, and address assignment and query are performed by using the virtual address interval described above. By querying the address translation table according to the virtual address, the data transmission device 503 may find an entry 504, that is, the virtual address is in a virtual address interval that has a start address 0xa000 and a size of 1 G. It can be known from the entry 504 that the virtual address interval corresponds to a DMA memory address that is on the host 3 and that has a start address 0x0 and a size of 1 G. Therefore, according to a difference bed between the start address of the virtual address interval and the virtual address, and the start address of the DMA memory address of the host 3, it can be obtained that a DMA memory address, which corresponds to the virtual address, in the DMA memory address interval of the host 3 is 0x0bcd. The DMA address in the DMA packet 502 is modified from the virtual address 0xabcd to the DMA memory address 0x0bcd of the host 3, to obtain a modified DMA packet 505. The DMA packet 505 is sent to the host 3, so that the I/O device initiates or performs a DMA operation on the DMA memory address of the host 3.

It can be seen that, in this embodiment of the present invention, a DMA packet sent by an I/O device is obtained, a DMA virtual address in the DMA packet is modified to a DMA memory address of a target host of the DMA operation, and the modified DMA packet is sent to the target host; the I/O device may perform a DMA operation on multiple hosts by using a DMA packet including a DMA virtual address. Because DMA virtual addresses are in a same global virtual address space, in comparison with the prior art, no conflict occurs between DMA memory addresses. Because multiple hosts can perform data transmission with the I/O device simultaneously, data transmission between hosts may be implemented by using a DMA operation of the I/O device, and data transmission does not need to be directly performed between hosts. A link bus between a host and an I/O device has features of a high bandwidth and a low delay, and a CPU of the host does not need to intervene; therefore, timeliness and efficiency of network transmission are improved, and network application scenarios are expanded.

In addition, in this embodiment of the present invention, the DMA virtual address and the target host may be obtained according to a correspondence among DMA virtual addresses, DMA memory addresses, and hosts. When the correspondence is stored locally, a query for the DMA virtual address may be performed efficiently, improving efficiency of modifying the DMA address in the DMA packet. When the correspondence is stored in a remote management system, hardware complexity of the data transmission device can be reduced, so that specific implementation manners of the data transmission device are expanded and enriched.

In addition, in this embodiment of the present invention, after the correspondence is updated, update information is sent to a host, so that the correspondence in the host and the address translation table in the data transmission device are updated synchronously. Therefore, the host can independently perform translation between a DMA virtual address and a corresponding DMA memory address, thereby expanding application scenarios of the present invention.

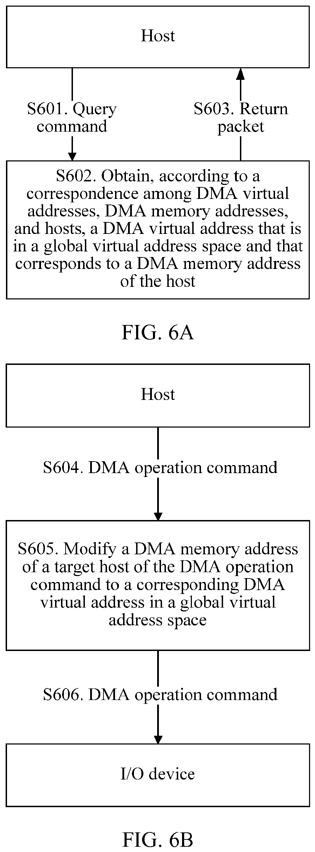

With reference to FIG. 6A and FIG. 6B, FIG. 6A and FIG. 6B are schematic flowcharts of a second data transmission method according to an embodiment of the present invention. This embodiment is described with reference to the first embodiment. The method in this embodiment includes steps S401, S402, and S403 in the first embodiment, and therefore, descriptions that are the same as or similar to these steps are not repeated in this embodiment.

A DMA operation may be initiated by sending, by a host, a DMA operation starting request to an I/O device. The DMA operation starting request includes a DMA memory address, to instruct the I/O device to initiate a DMA operation to the DMA memory address. In the present invention, with reference to the description in the first embodiment, the I/O device needs to initiate a DMA operation to a DMA virtual address, that is, send a DMA packet that uses a DMA virtual address as a DMA address. Therefore, the DMA operation starting request received by the I/O device should also use a DMA virtual address.

The DMA operation starting request sent by the host to the I/O device may directly use a DMA virtual address, so that the I/O device can receive the DMA operation starting request including a DMA virtual address. In this case, the host may store locally, by using the method provided in the first embodiment, a correspondence that is synchronously updated with the data transmission device, so as to obtain the DMA virtual address in the DMA operation starting request according to the correspondence; or may send a query command to another device that stores an address translation table, to obtain the DMA virtual address. The DMA operation starting request sent by the host to the I/O device may also use a DMA memory address of a target host; by sending the operation command to the data transmission device, the DMA memory address in the operation command is modified to a corresponding DMA virtual address, and a modified DMA operation starting request is sent to the I/O device.

With reference to FIG. 6A, in an implementation manner of this embodiment of the present invention, the data transmission device may respond to a query command of the host in the following manner. The data transmission method further includes:
S601: Receive a query command sent by a host, where the query command includes a DMA memory address of a host that needs to be queried for.
S602: Obtain, according to the correspondence among DMA virtual addresses, DMA memory addresses, and hosts, a DMA virtual address that is in the global virtual address space and that corresponds to the DMA memory address of the host.
S603: Send a return packet to the host, where the return packet includes the DMA virtual address that is in the global virtual address space and that corresponds to the DMA memory address of the host.

There are multiple implementation manners for obtaining the DMA virtual address that is in the global virtual address space and that corresponds to the DMA memory address of the target host, and the obtaining manner has the same principle as the obtaining a corresponding DMA memory address according to a DMA virtual address described above. Details are not described herein again.

In a specific implementation manner, the manner for obtaining the DMA virtual address corresponding to the DMA memory address may be implemented by querying an address translation table. The obtaining a DMA virtual address that is in the global virtual address space and that corresponds to the DMA memory address of the target host includes: querying the address translation table according to the DMA memory address of the target host, to obtain the DMA virtual address that is in the global virtual address space and that corresponds to the DMA memory address of the target host, where the address translation table includes a correspondence between virtual addresses in a virtual address interval in the global virtual address space and memory addresses in a DMA memory address interval of a host corresponding to the virtual address interval.

The address translation table may be the address translation table in the foregoing first method embodiment, or may be an optimized separate address translation table for querying for a corresponding DMA virtual address according to a DMA memory address. In a manner that can be listed, the DMA memory address of the target host is 0x0bcd, and according to the address, a host DMA memory address having a memory start address 0x0 and a size of 1 G can be found. A start address of a DMA virtual address interval corresponding to this entry is 0xa000, and therefore, according to a difference between the DMA memory address and the memory start address, and the start address of the DMA virtual address interval, it can be obtained that the corresponding DMA virtual address is 0xabcd.

With reference to FIG. 6B, in another implementation manner, the data transmission device may obtain a DMA operation starting request sent by a host, modify the DMA operation starting request, and forward a modified DMA operation starting request to the I/O device. The data transmission method further includes:
S604: Obtain a DMA operation starting request sent by a host to the I/O device, where the operation command includes a DMA memory address of a target host, to instruct the I/O device to perform a DMA operation on the target host.
S605: Modify a DMA memory address of the target host in the DMA operation starting request to a corresponding DMA virtual address in the global virtual address space.
S606: Send the modified DMA operation starting request to the I/O device.

Similarly, a manner for determining, according to the correspondence among DMA virtual addresses, DMA memory addresses, and hosts, a DMA virtual address that is in the global virtual address space and that corresponds to the DMA memory address in the DMA operation starting request has the same principle as the obtaining a corresponding DMA memory address according to a DMA virtual address described above. Details are not described herein again.

It can be seen that, in this embodiment of the present invention, a query command sent by a host is received, a DMA virtual address that is in a global virtual address space and that corresponds to a DMA memory address of the target host is obtained, and a return packet is sent to the host, so that the host obtains the DMA virtual address corresponding to the DMA memory address, and can send a DMA operation starting request including the DMA virtual address, to instruct an I/O device to initiate a DMA operation to the DMA memory address corresponding to the DMA virtual address. Alternatively, a DMA operation starting request sent by a host to an I/O device is obtained, a DMA memory address of a target host in the DMA operation starting request is modified to a corresponding DMA virtual address in a global virtual address space, and the modified DMA operation starting request is sent to the I/O device, so that the DMA operation starting request sent by the host can be used to instruct the I/O device to initiate a DMA operation to the DMA memory address corresponding to the DMA virtual address.

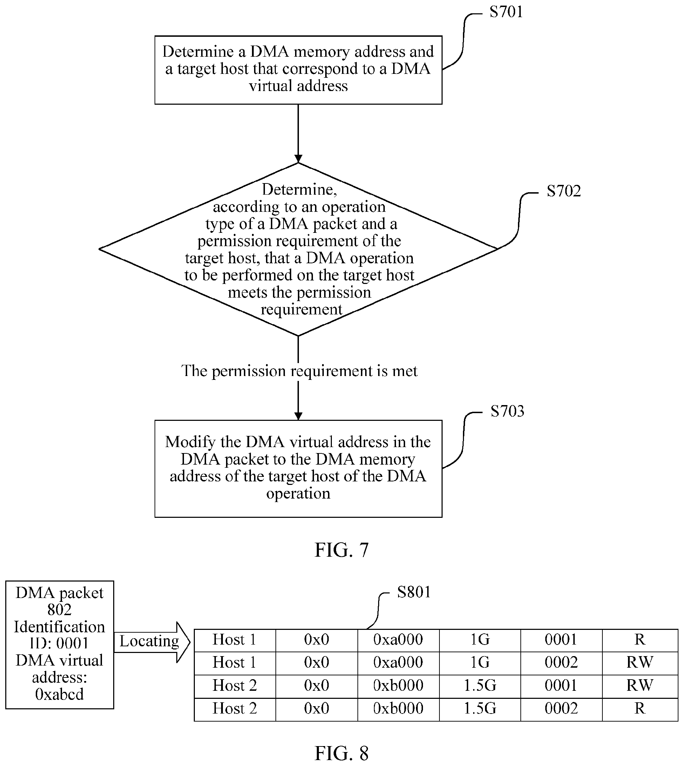

With reference to FIG. 7, FIG. 7 is a schematic flowchart of a third data transmission method according to an embodiment of the present invention. This embodiment is described with reference to the first embodiment and the second embodiment. The method in this embodiment includes steps S401, S402, and S403 in the first embodiment, and may include steps S601 to S606 in the second embodiment. Therefore, descriptions that are the same as or similar to these steps are not repeated in this embodiment.

According to this embodiment, permission control can be implemented on a DMA packet that is sent by an I/O device and that is used to perform a DMA operation on a destination host. That is, after receiving the DMA packet, a data transmission device determines whether a DMA operation to be performed on the destination host by using the DMA packet meets a permission requirement, and the DMA address in the DMA packet is modified only when the DMA packet is permitted to perform the DMA operation on the destination host.

With reference to FIG. 7, in an implementation manner of this embodiment, the method further includes:
S701: Determine a DMA memory address and a target host that correspond to the DMA virtual address.
S702: Determine, according to permission information of the DMA packet and a permission requirement of the target host, that the DMA operation to be performed on the target host meets the permission requirement.
S703: If the DMA operation meets the permission requirement, modify the DMA virtual address in the DMA packet to the DMA memory address of the target host of the DMA operation.

Determining whether the DMA operation to be performed on the target host meets the permission requirement may be implemented in multiple manners. For example, whether the permission requirement is met may be determined by querying a separate permission table including a host identifier and a corresponding DMA operation type. When the foregoing correspondence is stored in an address translation table, whether the permission requirement is met may be determined by querying the address translation table. The address translation table has one more item: an operation type, compared with the foregoing address translation table. When an entry in the address translation table is found according to the DMA virtual address, a type of a DMA operation that can be performed on a destination host corresponding to a virtual address interval to which the DMA virtual address belongs can be obtained.

In another implementation manner of this embodiment, at least one of the following information is included: a type of the DMA packet, a permission identifier of the DMA packet, or an identifier of the host sending the DMA packet.

In this implementation manner, when it is determined whether the DMA operation has permission, a permission identifier is added as a consideration factor. The permission identifier is an identifier for identifying a DMA operation permission-related feature of a packet in which the identifier is located. The permission identifier may be information already existing in a general DMA packet. For example, the permission identifier may be an identifier ID of the I/O device sending the DMA packet, and by determining the permission identifier, it can be implemented that a specific I/O device is permitted to perform a specific DMA operation on a specific host. The permission identifier may also be newly added information that does not exist in a general DMA packet. For example, the permission identifier may be an identifier ID of a type of to-be-transmitted data in the DMA operation, so that the I/O device can transmit data of a specific type to a specific host in a DMA manner. Alternatively, the permission identifier may be an identifier ID of a host that instructs the I/O device to initiate a DMA operation, thereby implementing that a specific host is permitted to perform a DMA operation on a specific host. It can be understood that, the permission identifier may be an identifier ID of a single piece of information listed above, or may be an identifier ID of a combination of several types of information. For example, the permission identifier may be used to identify a DMA packet, for transmitting data of a particular type, sent by a specific I/O device.

Similarly, the determining whether the DMA operation to be performed on the target host meets the permission requirement may be implemented in multiple manners. For example, whether the permission requirement is met may be determined by querying a separate permission table including a host ID, a permission identifier, and a corresponding DMA operation type; or whether the permission requirement is met is determined by querying an address translation table, where the address translation table has two more pieces of content: the operation type and the permission identifier, compared with the foregoing address translation table.

With reference to FIG. 8, an example is listed herein, in which permission control is performed on a packet after an operation type and a permission identifier are added to an address translation table. A data transmission device obtains a DMA packet 802 sent by an I/O device. A DMA address in the DMA packet 802 is a DMA virtual address 0xabcd, and an identifier ID of the DMA packet 802 is 0001. According to the DMA virtual address, it can be found that a virtual address interval corresponding to the DMA virtual address has a start address 0xa000 and a space size of 1 G, and a memory interval of a host corresponding to the DMA virtual address is a memory space having a start address of a host 1, that is, 0x0, and a size of 1 G. According to the identifier ID 0001, it can be known that DMA operation permission of the identifier ID for the host 1 is R, that is, a DMA packet with the identifier ID 0001 is only allowed to initiate a read operation to the DMA memory interval of the host 1. Therefore, when the operation type of the DMA packet 802 is a write operation, the permission requirement is met. The data transmission device modifies the DMA address in the DMA packet 802, and sends a modified DMA packet to the host 1.

It can be seen that, in this embodiment, by determining permission of a DMA packet, permission control can be implemented when an I/O device performs a DMA operation on a host. Because the I/O device is connected to multiple hosts, by means of permission control, reliability and security of data transmission on a whole network can be improved. In addition, by means of permission control, network use scenarios may also be expanded, implementing more complex network deployment and transmission manners.

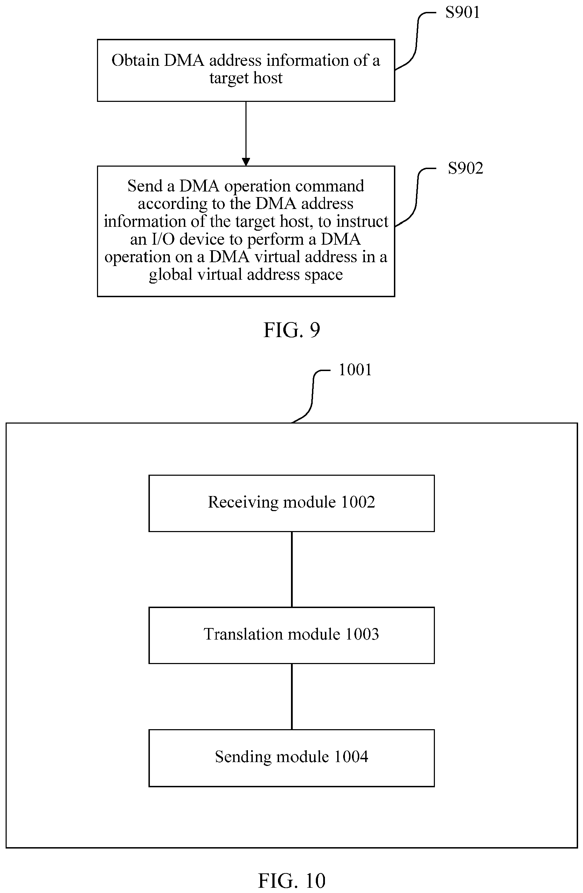

With reference to FIG. 9, FIG. 9 is a schematic flowchart of a fourth data transmission method according to an embodiment of the present invention. This embodiment is described with reference to the first, second, and third embodiments. Concepts or terms in this embodiment that already appear in the foregoing embodiments and that have same or similar meanings are not described in detail again in this embodiment. The method in this embodiment corresponds to some steps of the methods in the foregoing embodiments. Therefore, this embodiment may be comprehended and expanded with reference to the related steps in the foregoing embodiments.

The data transmission method provided in this embodiment is performed by a host in the network topology described in FIG. 2, and the host represents an independent physical host running an independent OS and having an independent DMA address space. This method is used to enable a host to instruct an I/O device to perform a DMA operation on a target host, and the method includes the following steps:
S901: Obtain DMA address information of a target host.

The target host is a target host on which the I/O device is instructed, by the host performing this method, to perform a DMA operation, that is, a host to which a DMA memory address belongs, where the DMA memory address corresponds to a DMA virtual address in the DMA packet that is sent by the I/O device so as to perform a DMA operation. In a possible scenario, the target host is the host performing the method, and in this case, the host instructs the I/O device to initiate a DMA operation to the host, so as to implement data exchange between the host and the I/O device. In another possible scenario, the target host is another host connected to a same I/O device as the host performing this method, and in this case, the host instructs the I/O device to initiate a DMA operation to the another host, so as to implement data exchange between the I/O device and the another host.

The DMA address information may be DMA memory address information of the target host or may be DMA virtual address information. When the target host is the host performing this method, by assignment of a DMA memory address interval, the DMA memory address information can be obtained; when the target host is another host, a DMA memory address or a DMA virtual address of the target host may be obtained by querying an address translation table, or may be obtained by receiving a DMA memory address or a DMA virtual address included in a request instruction sent by another device.

S902: Send a DMA operation starting request according to the DMA address information of the target host, where the DMA operation starting request includes a DMA address, to instruct the I/O device to perform a DMA operation on a DMA virtual address in a global virtual address space, and the DMA virtual address is a DMA virtual address obtained by mapping a DMA memory address of the target host into the global virtual address space.

As described in the background, a DMA operation performed by an I/O device may be initiated by a DMA operation starting request. In the prior art, one I/O device can be connected to and perform a DMA operation only on one host. Therefore, when the host needs to exchange data with the I/O device, the host may send a DMA operation starting request to the I/O device, where the DMA operation starting request includes a memory address of data to be read by the I/O device or a memory address for storing data sent by the I/O device. After receiving the DMA operation starting request, the I/O device initiates a DMA operation to the memory address, to read or write data, thereby completing data exchange. In the present invention, multiple hosts are connected to the I/O device, and can perform a DMA operation. Therefore, the DMA operation starting request not only can be used to instruct the I/O device to perform a DMA operation on the host performing this method, but also can instruct the I/O device to perform a DMA operation on another host. In a distributed I/O device sharing scenario, by means of this embodiment, a host may perform data exchange in a DMA manner between a host and an I/O device and between hosts.

When the DMA address information includes the DMA memory address of the target host, in an implementation manner, the sending a DMA operation starting request according to the DMA address information of the target host includes: sending the DMA operation starting request to the data transmission device, where a DMA address in the DMA operation starting request is the DMA memory address of the target host, to instruct the data transmission device to modify the DMA address in the DMA operation starting request from the DMA memory address of the target host to a corresponding DMA virtual address in the global virtual address space, and forward the DMA operation starting request to the target host.

With reference to the steps in the foregoing second embodiment, in this implementation manner, the host uses a DMA memory address as a DMA address of the DMA operation indicated by the DMA operation starting request. The DMA packet that is sent by the I/O device and that is used for performing the DMA operation needs to use a DMA virtual address. Therefore, the DMA operation starting request is sent to the data transmission device, and the data transmission device translates the DMA memory address in the DMA operation starting request to a corresponding DMA virtual address, and sends, to the I/O device, a DMA operation starting request obtained after the translation.

When the DMA address information includes the DMA memory address of the target host, in another implementation manner, the sending a DMA operation starting request according to the DMA address information of the target host includes: obtaining, according to a correspondence among DMA virtual addresses, DMA memory addresses, and hosts, a DMA virtual address that is in the global virtual address space and that corresponds to the DMA memory address of the target host, and sending the DMA operation starting request to the I/O device, where a DMA address of the DMA operation starting request is the DMA virtual address.

Querying an address translation table according to the memory address of the target host to obtain a corresponding virtual address can be comprehended with reference to the query method provided in the foregoing embodiment. Specifically, for example, when the memory address of the target host is 0x0bcd, by querying the address translation table, it can be obtained that a memory address interval to which the memory address belongs is a memory address space having a start address 0x0 and a size of 1 G, and a start address of a virtual address interval corresponding to the memory address interval is 0xa000. Therefore, the virtual address corresponding to the memory address is 0xabcd.

When the DMA operation starting request is sent to the I/O device, the DMA operation starting request may be directly sent to the I/O device connected to the host; or by means of forwarding by another device, including the data transmission device, the DMA operation starting request is sent to the I/O device indirectly connected to the host.

When the DMA address information includes a DMA virtual address of the target host, in an implementation manner, the sending a DMA operation starting request according to the DMA address information of the target host includes: sending the DMA operation starting request to the I/O device, where the DMA address in the DMA operation is a DMA virtual address that is in the global virtual address space and that corresponds to the DMA memory address of the target host.

Similarly, when the DMA operation starting request is sent to the I/O device, the DMA operation starting request may be directly sent to the I/O device connected to the host; or by means of forwarding by another device, including the data transmission device, the DMA operation starting request is sent to the I/O device indirectly connected to the host.

In an implementation manner of this embodiment, the host assigns a DMA memory address, where the DMA memory address is used by one or more I/O devices to access the DMA memory address in a direct memory access DMA manner, and sends registration information. The registration information includes an identifier ID of the host and the DMA memory address of the host. The host may send the registration information after being connected to a network or reassigning a memory address interval, and may send the registration information to the data transmission device, or to a host on which the management system is located, to update a correspondence stored by the data transmission device or another host.

In another implementation manner, the host assigns a DMA memory address interval, where the DMA memory address interval includes DMA memory addresses, and the DMA memory address is used by one or more I/O devices to access the DMA memory address in a direct memory access DMA manner. In addition, the host sends registration information, where the registration information includes an identifier ID of the host and the DMA memory address interval of the host. The host may send the registration information after being connected to a network or reassigning a memory address interval, and may send the registration information to the data transmission device, or to a host on which the management system is located, to update a correspondence stored by the data transmission device or another host.

In another implementation manner of this embodiment, the host may further update a locally stored address translation table, so as to maintain synchronization between the local address translation table and an address translation table of the data transmission device. The method further includes: obtaining update information, where the update information includes a correspondence that needs to be updated and that is among a DMA virtual address, a DMA memory address, and a host; and adding or updating, according to the update information, the correspondence that needs to be updated and that is among a DMA virtual address, a DMA memory address, and a host to the existing correspondence among DMA virtual addresses, DMA memory addresses, and hosts.

According to different implementation forms of the correspondence, specific expression forms of a correspondence that is in the update information and that is between a DMA memory address interval and a virtual address interval of the host should correspond thereto. For a specific implementation form of the address translation table, reference may be made to the manner listed in the first embodiment. The update information may come from the data transmission device, or may come from another device on the network, for example, a host on which the management system is located or another host connected to the host.

It can be seen that, in this embodiment of the present invention, DMA address information of a target host is obtained, and a DMA operation starting request is sent according to the DMA address information of the target host, so that an I/O device initiates a DMA operation to the target host. In an environment in which multiple hosts share an I/O device, data transmission between the I/O device and a target host can be managed. When the I/O device is used as a data storage device, rapid data synchronization between a host and a target host can be further implemented by using the I/O device, improving network transmission efficiency.

In addition, update information is sent or update information for a correspondence is obtained, so that when a network topology changes or after a DMA memory address of a host changes, the correspondence can be updated in time, and the update information is synchronized to another device.

With reference to FIG. 10, FIG. 10 is a schematic structural diagram of a data transmission device 1001 according to an embodiment of the present invention. The data transmission device provided in this embodiment may be configured to perform the methods of the first, second, and third embodiments in the foregoing embodiments. Therefore, this embodiment may be comprehended with reference to the foregoing embodiments. Concepts or terms in this embodiment that already appear in the foregoing embodiments and that have same or similar meanings are not described in detail again in this embodiment.

This data transmission device is used as a data transmission device in the network topology structure in FIG. 2. This device may be an independent device separately connected to a host and an I/O device; or may be a module integrated on an I/O device, or a module that is integrated on a host and that is connected to another host and an I/O device, as long as this device is connected to a host and an I/O device in the network topology. This device may be connected to a host and an I/O device by using a high-speed bus such as a PCIe bus. For the host connected to this device, a virtual PCIe device is enumerated, and a hardware resource of the virtual PCIe device corresponds to a shared PCIe I/O device.

The data transmission device 1001 is separately connected to the multiple hosts and the one or more input/output I/O devices. The multiple hosts share the one or more I/O devices. The one or more I/O devices access respective DMA memory addresses of the multiple hosts in a direct memory access DMA manner. The DMA memory addresses are mapped, in a one-to-one manner, to virtual addresses in a global virtual address space. The device includes:
a receiving module 1002, configured to obtain a DMA packet sent by the I/O device, where the DMA packet carries a DMA virtual address, and the DMA virtual address is a virtual address in the global virtual address space;
a translation module 1003, configured to determine, according to a correspondence among DMA virtual addresses, DMA memory addresses, and hosts, a DMA memory address and a target host that correspond to the DMA virtual address, where the DMA memory address is a DMA memory address mapped to the DMA virtual address, and the target host is a host to which the DMA memory address mapped to the DMA virtual address belongs; and modify the DMA virtual address in the DMA packet to the DMA memory address mapped to the DMA virtual address; and
a sending module 1004, configured to send the modified DMA packet to the target host.

In an implementation manner, when the translation module determines, according to the correspondence among DMA virtual addresses, DMA memory addresses, and hosts, the DMA memory address and the target host that correspond to the DMA virtual address, the correspondence among DMA virtual addresses, DMA memory addresses, and hosts includes: the DMA memory addresses of the multiple hosts form multiple DMA memory address intervals, and each host corresponds to one or more DMA memory address intervals; the global virtual address space includes multiple non-overlapping virtual address intervals, the multiple virtual address intervals correspond to the multiple DMA memory address intervals in a one-to-one manner, and virtual addresses in a virtual address interval correspond to DMA memory addresses in a corresponding DMA memory address interval in a one-to-one manner.

The correspondence among DMA virtual addresses, DMA memory addresses, and hosts may be stored by using an address translation table. The address translation table is the address translation table described in the foregoing method embodiment, and the address translation table may be stored in a memory or register of the data transmission device, to be read and then queried by the translation module 1003. When the data transmission device is not an independent node in the network topology, the address translation table may be stored in a memory or register of a host on which the data transmission device is located or in an I/O device, and is read and queried by using the translation module 1003.

The address translation table may be preset manually, or the address translation table is obtained by means of synchronization with another device on the network. In another implementation manner, the receiving module is further configured to obtain registration information of one or more hosts among the multiple hosts, where the registration information includes an identifier ID and a DMA memory address of the corresponding host; the device further includes a virtual address maintaining module, configured to assign a virtual address to the host according to the DMA memory address of the host, where the virtual address is in the global virtual address space, and the virtual address corresponds, in a one-to-one manner, to the DMA memory address of the host; and add or update the correspondence among the host ID, the DMA memory address of the host, and the virtual address of the host to the correspondence among DMA virtual addresses, DMA memory addresses, and hosts.

In another implementation manner, the receiving module is further configured to obtain registration information of one or more hosts among the multiple hosts, where the registration information includes an identifier ID and a DMA memory address interval of the corresponding host. The device further includes a virtual address maintaining module, configured to: assign one or more virtual address intervals to the host according to one or more DMA memory address intervals of the host, where the virtual address interval is in the global virtual address space, the one or more virtual address intervals correspond, in a one-to-one manner, to the one or more DMA memory address intervals of the host, and virtual addresses in a virtual address interval correspond to DMA memory addresses in a corresponding DMA memory address interval in a one-to-one manner; and add or update a correspondence among the host ID, the DMA memory address interval of the host, and the virtual address interval of the host to the correspondence among DMA virtual addresses, DMA memory addresses, and hosts.

The registration information of the host may be sent by the host, after the host is connected to the network, to the device performing this method, or the registration information of the host connected to the network may be sent, by using the management system, to the device performing this method. The memory address interval of the host may be expressed by using a start address of the memory address and an interval size, or may be expressed by using a set of specific continuous or discontinuous addresses or address intervals. Assigning a virtual address interval to the host is assigning, according to the size of the memory address interval of the host, a virtual address interval of a corresponding size, and adding the virtual address interval to the global virtual address space, or replacing an existing virtual address interval of the host in the global virtual address space with the virtual address interval. It can be understood that, when the virtual address interval is assigned, it should be ensured that virtual address intervals and memory address intervals of hosts are in a one-to-one correspondence.

In an embodiment, the correspondence may be synchronously updated to a host. The sending module is further configured to: after the correspondence among DMA virtual addresses, DMA memory addresses, and hosts is updated, send update information to a host, to instruct the host to synchronously update the correspondence that is stored on the host and that is among DMA virtual addresses, DMA memory addresses, and hosts. The update information may be partial information that changes in the correspondence, and such update information may be used for synchronous update of a device already storing the correspondence that is not updated; or the update information may be a complete address translation table. It can be understood that, the update information may be actively sent to a host after the address translation table is updated. Alternatively, after a query command sent by a host is received, it is determined whether the address translation table is updated, and if the address translation table is updated, the update information is sent to the host. The update information may be sent to all the hosts, or sent to some specific hosts, or sent to a host on which the management system is located.

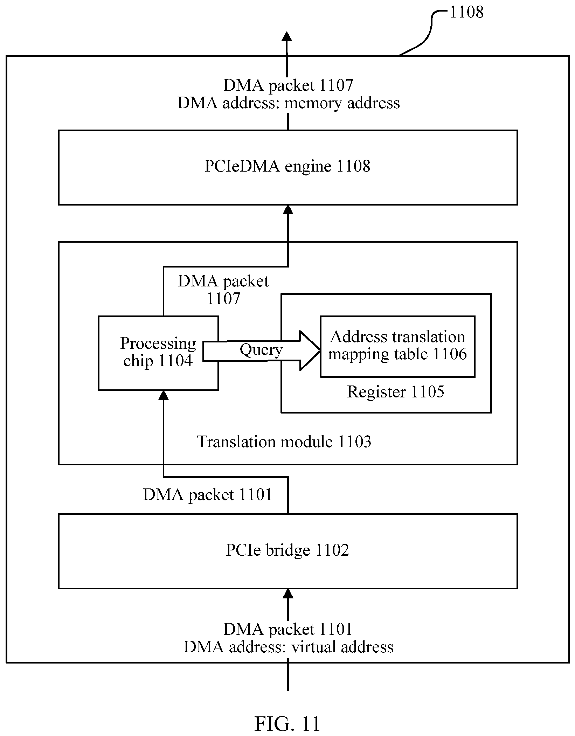

With reference to FIG. 11, a specific implementation manner of this embodiment is listed. The data transmission device 1108 receives, by using a PCIe bridge 1102, a DMA packet 1101 sent by an I/O device, where a DMA address in the DMA packet 1101 is a virtual address. The PCIe bridge transmits the DMA packet 1101 to a DMA address translation logic module 1103. The DMA address translation logic module includes a processing chip 1104 and a register 1105. The processing chip 1104 accesses an address translation table 1106 stored in the register 1105 to obtain, according to the DMA virtual address in the DMA packet 1101, a DMA memory address corresponding to the virtual address, and modifies the DMA address in the DMA packet 1101 from the virtual address to the memory address, to obtain a modified DMA packet 1107. The DMA address translation logic module 1103 transmits the modified DMA packet 1107 to a PCIeDMA engine 1108, and the PCIeDMA engine 1108 sends the DMA packet 1101 to a target host, so that the I/O device initiates a DMA operation to the target host. In this implementation manner, the PCIe bridge and the PCIeDMA engine can implement the receiving module and the sending module in the foregoing embodiment.

It can be seen that, in the embodiment, the network transmission device 1001 obtains a DMA packet sent by an I/O device, modifies a DMA virtual address in the DMA packet to a DMA memory address of a target host of the DMA operation, and sends the modified DMA packet to the target host; the I/O device can perform a DMA operation on multiple hosts by using a DMA packet including a DMA virtual address. Because DMA virtual addresses are in a same global virtual address space, in comparison with the prior art, no conflict occurs between DMA memory addresses. Because multiple hosts can perform data transmission with the I/O device simultaneously, data transmission between hosts may be implemented by using a DMA operation of the I/O device, and data transmission does not need to be directly performed between hosts. A link bus between a host and an I/O device has features of a high bandwidth and a low delay, and a CPU of the host does not need to intervene; therefore, timeliness and efficiency of network transmission are improved, and network application scenarios are expanded.

In addition, in this embodiment of the present invention, after a correspondence is updated, update information is sent to a host, so that the address translation table in the host and the correspondence in the data transmission device are updated synchronously. Therefore, the host can independently perform translation between a DMA virtual address and a corresponding DMA memory address, thereby expanding application scenarios of the present invention.

In an embodiment, the network transmission device may further respond to a query command sent by a host. The receiving module is further configured to: receive a query command sent by a host, and transmit the query command to a virtual address query module, where the query command includes a DMA memory address of a target host that needs to be queried.

The device further includes the virtual address query module, configured to: obtain the query command transmitted from the receiving module, query, according to the DMA memory address of the target host, for a DMA virtual address that is in a global virtual address space and that corresponds to the DMA memory address of the target host, and transmit the DMA virtual address in the global virtual address space to the sending module.

The sending module is further configured to: obtain the DMA virtual address in the global virtual address space that is transmitted by the virtual address query module, and send a return packet to the host, where the return packet includes the DMA virtual address in the global virtual address space.

There are multiple implementation manners for obtaining the DMA virtual address that is in the global virtual address space and that corresponds to the DMA memory address of the target host, and the obtaining manner has the same principle as the obtaining a corresponding DMA memory address according to a DMA virtual address described above. Details are not described herein again.

In an embodiment, the network transmission device may further modify and forward the DMA operation starting request sent by the host.

The receiving module is further configured to obtain a DMA operation starting request sent by any host to the I/O device, where the DMA operation starting request includes a DMA memory address of another host, and the DMA operation starting request is used for instructing the I/O device to perform a DMA operation on the another host.

The translation module is further configured to: determine, according to a correspondence among DMA virtual addresses, DMA memory addresses, and hosts, a DMA virtual address that is in the global virtual address space and that corresponds to the DMA memory address in the DMA operation starting request, and modify the DMA memory address in the DMA operation starting request to the determined DMA virtual address.

The sending module is further configured to send the modified DMA operation starting request to the I/O device.

Similarly, there are multiple implementation manners for obtaining the DMA virtual address that is in the global virtual address space and that corresponds to the DMA memory address of the target host, and the obtaining manner has the same principle as the obtaining a corresponding DMA memory address according to a DMA virtual address described above. Details are not described herein again.

It can be seen that, in this embodiment of the present invention, the data transmission device receives a query command sent by a host, obtains a DMA virtual address that is in a global virtual address space and that corresponds to a DMA memory address of the target host, and sends a return packet to the host, so that the host obtains the DMA virtual address corresponding to the DMA memory address, and therefore can send a DMA operation starting request including the DMA virtual address, to instruct an I/O device to initiate a DMA operation to the DMA memory address corresponding to the DMA virtual address. Alternatively, a DMA operation starting request sent by a host to an I/O device is obtained, a DMA memory address of a target host in the DMA operation starting request is modified to a corresponding DMA virtual address in a global virtual address space, and the modified DMA operation starting request is sent to the I/O device, so that the DMA operation starting request sent by the host can be used to instruct the I/O device to initiate a DMA virtual address to the DMA memory address corresponding to the DMA virtual address.

In an embodiment, the data transmission device may further implement permission control on the DMA packet. In a specific implementation manner, the translation module is further configured to: after determining the DMA memory address and the target host that correspond to the DMA virtual address, determine, according to an operation type of the DMA packet and a permission requirement of the target host, that the DMA operation to be performed on the target host meets the permission requirement; and if the DMA operation meets the permission requirement, modify the DMA virtual address in the DMA packet to the DMA memory address of the target host of the DMA operation.

The determining whether the DMA operation to be performed on the target host meets the permission requirement may be implemented in multiple manners. For example, whether the permission requirement is met may be determined by querying a separate permission table including a host ID and a corresponding DMA operation type; or whether the permission requirement is met is determined by querying an address translation table, where the address translation table has one more item: an operation type, compared with the foregoing address translation table. When an entry in the address translation table is found according to the DMA virtual address, a type of a DMA operation that can be performed on a destination host corresponding to a virtual address interval to which the DMA virtual address belongs can be obtained.

In another specific implementation manner, the DMA packet further includes a permission identifier. The translation module is further configured to: after determining the DMA memory address and the target host that correspond to the DMA virtual address, determine, according to the operation type of the DMA packet, the permission identifier, and the permission requirement of the target host, whether the DMA operation to be performed on the target host by using the DMA packet including the permission identifier meets the permission requirement; and if the permission requirement is met, modify the DMA virtual address in the DMA packet to the DMA memory address of the target host of the DMA operation.

In this implementation manner, when it is determined whether the DMA operation has permission, a permission identifier is added as a consideration factor. The permission identifier is an identifier for identifying a DMA operation permission-related feature of a packet in which the identifier is located. The permission identifier may be information already existing in a general DMA packet. For example, the permission identifier may be an identifier ID of the I/O device sending the DMA packet, and by determining the permission identifier, it can be implemented that a specific I/O device is permitted to perform a specific DMA operation on a specific host. The permission identifier may also be newly added information that does not exist in a general DMA packet. For example, the permission identifier may be an identifier ID of a type of to-be-transmitted data in the DMA operation, so that the I/O device can transmit data of a specific type to a specific host in a DMA manner. Alternatively, the permission identifier may be an identifier ID of a host that instructs the I/O device to initiate a DMA operation, thereby implementing that a specific host is permitted to perform a DMA operation on a specific host. It can be understood that, the permission identifier may be an identifier ID of a single piece of information listed above, or may be an identifier ID of a combination of several types of information. For example, the permission identifier may be used to identify a DMA packet, for transmitting data of a particular type, sent by a specific I/O device.

It can be seen that, in this embodiment, by determining permission of a DMA packet, permission control can be implemented when an I/O device performs a DMA operation on a host. Because the I/O device is connected to multiple hosts, by means of permission control, reliability and security of data transmission on a whole network can be improved. In addition, by means of permission control, network use scenarios may also be expanded, implementing more complex network deployment and transmission manners.

The present invention provides an embodiment of a data transmission system. The data transmission system provided in this embodiment includes devices for executing the foregoing first, second, third, and fourth method embodiments. Therefore, this embodiment may be comprehended with reference to the foregoing embodiments. Concepts or terms in this embodiment that already appear in the foregoing embodiments and that have same or similar meanings are not described in detail again in this embodiment.

In this embodiment, the system includes at least one host. The computer system includes multiple hosts, one or more input/output I/O devices, and a data transmission device separately connected to the multiple hosts and the one or more I/O devices.

The data transmission device is configured to map, in a one-to-one manner, DMAmemory addresses of the multiple hosts to virtual addresses in a global virtual address space. The data transmission device is further configured to: obtain a DMA packet that is sent by the I/O device and that carries a DMA virtual address, where the DMA virtual address is a virtual address in the global virtual address space; determine, according to a correspondence among DMA virtual addresses, DMA memory addresses, and hosts, a DMA memory address and a target host that correspond to the DMA virtual address, where the DMA memory address is a DMA memory address mapped to the DMA virtual address, and the target host is a host to which the DMA memory address belongs; modify the DMA virtual address in the DMA packet to the DMA memory address mapped to the DMA virtual address; and send the modified DMA packet to the target host.

In an implementation manner, the correspondence among DMA virtual addresses, DMA memory addresses, and hosts includes: the DMA memory addresses of the multiple hosts form multiple DMA memory address intervals, and each host corresponds to one or more DMA memory address intervals; the global virtual address space includes multiple non-overlapping virtual address intervals, the multiple virtual address intervals correspond to the multiple DMA memory address intervals in a one-to-one manner, and virtual addresses in a virtual address interval correspond to DMA memory addresses in a corresponding DMA memory address interval in a one-to-one manner. The determining a DMA memory address and a target host that correspond to the DMA virtual address includes: determining, according to a virtual address interval to which the DMA virtual address belongs, a DMA memory address interval corresponding to the virtual address interval; and determining, according to the DMA memory address interval, a host corresponding to the DMA memory address interval and a DMA memory address that is in the DMA memory address interval and that is mapped to the DMA virtual address.

This system can implement that one host instructs an I/O device to initiate a DMA operation to another host. In an implementation manner, the multiple hosts include a first host and a second host. The first host is configured to: obtain a DMA virtual address of the second host, and by using a DMA virtual address corresponding to the DMA memory address of the second host as a DMA address, send a DMA operation starting request to the I/O device, where the DMA operation starting request is used to instruct the I/O device to perform a DMA operation on the second host.

In this implementation manner, the first host may obtain the DMA virtual address of the second host by receiving a data transmission request sent by the second host, or a data transmission request sent by a host on which a management system is located. Alternatively, the first host may obtain a virtual address interval of the second host by querying an address translation table, so as to obtain the DMA virtual address of the second host. The first host sends a DMA operation starting request to the I/O device. When the I/O device is directly connected to the host, the DMA operation starting request may be directly sent. When the I/O device is indirectly connected to the host by using the data transmission device, the DMA operation starting request may be forwarded to the I/O device by the data transmission device.

In an implementation manner, the multiple hosts include a first host and a second host. The first host is configured to: obtain a DMA virtual address of the second host, and by using a DMA virtual address corresponding to the DMA memory address of the second host as a DMA address, send a DMA operation starting request to the I/O device, where the DMA operation starting request is used to instruct the I/O device to perform a DMA operation on the second host.

Alternatively, the multiple hosts include a first host and a second host. The first host is configured to: obtain a DMA memory address of the second host; obtain, according to a correspondence among DMA virtual addresses, DMA memory addresses, and hosts, a DMA virtual address that is in the global virtual address space and that corresponds to the DMA memory address of the target host, and send the DMA operation starting request to the I/O device, where a DMA address of the DMA operation starting request is the DMA virtual address.

In this implementation manner, similarly, the first host may obtain the DMA memory address of the second host by receiving a data transmission request sent by the second host, or a data transmission request sent by a host on which a management system is located. Alternatively, the first host may obtain a memory address interval of the second host by querying an address translation table, so as to obtain the DMA memory address of the second host. The first host sends a DMA operation starting request to the data transmission device. After obtaining the DMA operation starting request, with reference to the method in the first method embodiment, the data transmission device may modify a DMA memory address in the DMA operation starting request to a corresponding DMA virtual address, and send a modified DMA operation starting request to the I/O device.

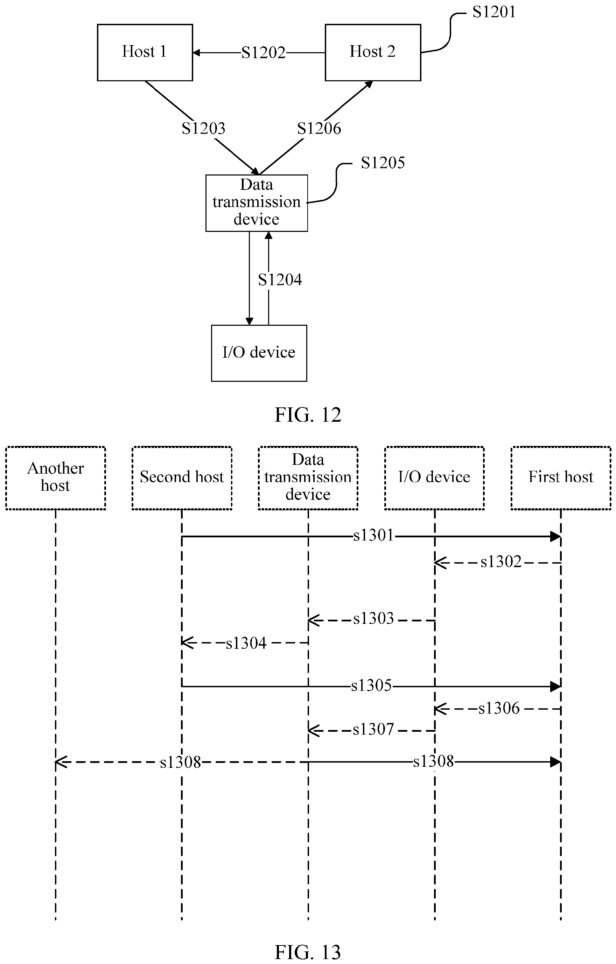

In a distributed system, multiple hosts share an I/O device, and the I/O device may be used as a data storage device. When data needs to be exchanged between hosts, data exchange may be performed rapidly in a DMA manner by using the data transmission system in this embodiment. With reference to FIG. 12, a specific implementation manner of this embodiment of the present invention is provided.

In a scenario of a distributed file system, a host 1 serves as a master node of the distributed file system and stores file system metadata information. A host 2 is an ordinary node of a distributed file system. The host 2 requests data information from the host 1, to synchronize local file system information. As shown in FIG. 12, the process is as follows:
S1201: The host 1 and the host 2 share an I/O device, and the host 2 assigns a cache space for received data, and obtains a DMA virtual address interval in a global virtual address space by using a DMA address translation table.
S1202: The host 2 initiates a request to obtain data on the host 1, and the host 2 also sends a DMA virtual address in the DMA virtual address interval to the host 1.
S1203: The host 1 receives and acknowledges the request, generates a DMA operation starting request locally, where a DMA address in the DMA operation starting request is the DMA virtual address in the virtual address interval of the host 2, and sends the DMA operation starting request to the I/O device.
S1204: After receiving the DMA operation starting request, the I/O device initiates a DMA operation, that is, sends a DMA packet, where a DMA address in the packet is a DMA virtual address.
S1205: The data transmission device obtains the DMA operation starting request, determines, according to the DMA address translation table, that a destination host of the DMA packet is the host 2, and modifies the DMA address in the DMA packet to the DMA memory address of the host 2.
S1206: The data transmission device sends the DMA packet to the host 2, the memory address of the host 2 is accessed according to the DMA packet, and the I/O device initiates a DMA operation to the host 2.

In an implementation manner, with reference to the foregoing third method embodiment, in this embodiment, permission control may be further implemented on the DMA packet. The translation module included in the data transmission device is further configured to: after determining the DMA memory address and the target host that correspond to the DMA virtual address, determine, according to an operation type of the DMA packet and a permission requirement of the target host, that the DMA operation to be performed on the target host meets the permission requirement; and if the DMA operation meets the permission requirement, modify the DMA virtual address in the DMA packet to the DMA memory address of the target host of the DMA operation. Alternatively, the DMA packet further includes a permission identifier. The data transmission device is further configured to: after determining the DMA memory address and the target host that correspond to the DMA virtual address, determine, according to the operation type of the DMA packet, the permission identifier, and the permission requirement of the target host, whether the DMA operation to be performed on the target host by using the DMA packet including the permission identifier meets the permission requirement, and if the permission requirement is met, modify the DMA virtual address in the DMA packet to the DMA memory address of the target host of the DMA operation.

It can be seen that, in this embodiment, during a whole interaction process, only simple information exchange is performed between hosts. By means of transferring target DMA address information, all data that needs to be transmitted is transmitted in a DMA manner between an I/O device and hosts. Moreover, because a bus between the I/O device and the hosts has a high bandwidth and low delay, in this manner, data transmission performance is significantly improved. Copying of data between hosts on a network is omitted, and moreover, a CPU does not need to intervene in a DMA operation, so that CPU performance of the host 1 and the host 2 can be released during the whole data copying process.

In addition, by means of permission control on DMA packets, only a permitted DMA packet is forwarded, and therefore, only a permitted DMA operation can be initiated to the second host. In this way, security of DMA operations is improved, and DMA operations can be filtered, thereby expanding network use scenarios and implementing more complex network deployment and transmission manners.

The present invention provides an embodiment of another data transmission system. The data transmission system provided in this embodiment includes devices for executing the foregoing first, second, third, and fourth method embodiments. Therefore, this embodiment may be comprehended with reference to the foregoing embodiments. Concepts or terms in this embodiment that already appear in the foregoing embodiments and that have same or similar meanings are not described in detail again in this embodiment.

This embodiment is applied to a distributed collaboration environment. Different hosts need to access hotspot data on a common I/O device, and the data needs to be synchronized in real time among multiple hosts. The at least one host includes a first host. The first host is configured to: after data on the I/O device is updated, send at least one DMA write operation command to the I/O device, where the DMA operation starting request is used to instruct the I/O device to perform a DMA write operation on another host except the first host, so as to synchronize data to the another host.

The multiple hosts include a first host. The first host is configured to: after data on the I/O device is updated, send at least one DMA write operation command to the I/O device, where the DMA operation starting request is used to instruct the I/O device to perform a DMA write operation on another host except the first host, so as to synchronize data to the another host.

For data update of the I/O device, reference may be made to the method in the foregoing embodiment. The I/O device reads data in a DMA memory address of a host to the I/O device by means of a DMA read operation, thereby implementing data update. In a specific implementation manner, when the I/O device updates data, a data area that needs to be updated is locked, and is unlocked after the data update process is completed, thereby preventing another host from accessing the data during the update process.

In an implementation manner, the data transmission system includes a management system. The management system is located on the first host, and is configured to take charge of synchronization management of hotspot data between hosts. With reference to FIG. 13, in an implementation manner that can be listed, a second host updates hotspot data of an I/O device, and synchronizes updated hotspot data to another host after the update. The data synchronization process includes the following steps.

S1301: A second host sends a data synchronization request to a first host, where the data synchronization request includes a DMA memory address of data that needs to be updated by the second host.

S1302: After receiving the data synchronization request sent by the second host, a management system on the first host locks a hotspot data area that needs to be updated on an I/O device, and updates a locked state to other hosts, so that other hosts cannot access locked hotspot data temporarily. In addition, the management system obtains, by querying an address translation table, a DMA virtual address corresponding to a DMA memory address of the second host, and sends a DMA read operation command to the I/O device, where a DMA address in the DMA read operation command is the DMA virtual address, to instruct the I/O device to initiate a DMA read operation to the second host.

S1303: The I/O device receives the DMA read operation command, and sends a DMA packet, where an operation type of the DMA packet is a read operation, and a DMA address in the DMA packet is the DMA virtual address of the second host.

S1304: A DMA address translation device modifies the DMA address in the DMA read operation command to the DMA memory address of the second host, and sends a modified DMA packet to the second host, so that the I/O device initiates a DMA read operation to the DMA memory address of the second host, to update the hotspot data to the I/O device.

S1305: After the DMA read operation is completed, the second host informs the management system on the first host, and the management system unlocks the hotspot data on the I/O device.

S1306: The management system on the first host sends at least one DMA write operation command to the I/O device, where the DMA operation operation request is used to instruct the I/O device to perform a DMA write operation on another host except the first host.

S1307: The I/O device separately sends a DMA packet according to the DMA write operation command, where a DMA address in the DMA packet is a DMA virtual address of another host, an operation type of the packet is a write operation, and the packet is used to initiate a DMA write operation to the another host.

S1308: The data transmission device obtains the DMA packet, modifies the DMA address in the DMA packet to a DMA memory address of the another host, and separately sends a modified DMA packet to the another host, so that the I/O device separately initiates a DMA write operation to the another host, so as to write updated hotspot data to the another host.

In an implementation manner, similar to the foregoing implementation manner, permission control may also be performed on a DMA packet, and a specific implementation manner is not described in detail again. In specific implementation of permission control on a DMA packet, because a permission identifier may represent multiple types of information, multiple specific permission control manners may be implemented. For example, for a specific host, only a specific I/O device can perform DMA read and/or write; or for a specific host, only data of a specific type can be read and/or written in a DMA manner; or for a specific host, only a DMA operation initiated by a specific host or management system can be used to perform DMA read and/or write.

It can be seen that, in this embodiment, a management system may actively update cache data on other hosts, and by means of DMA, data processing performance is improved compared with network transmission in the prior art. Because other hosts can passively update local data, that is, in a case in which a host does not intervene, data in a local cache space is updated in real time, thereby improving data timeliness and reliability of a whole network.

In addition, by means of permission control on DMA packets, DMA operations can be screened, improving reliability and security of network transmission on a whole network. In addition, by means of permission control, network use scenarios may also be expanded, implementing more complex network deployment and transmission manners.

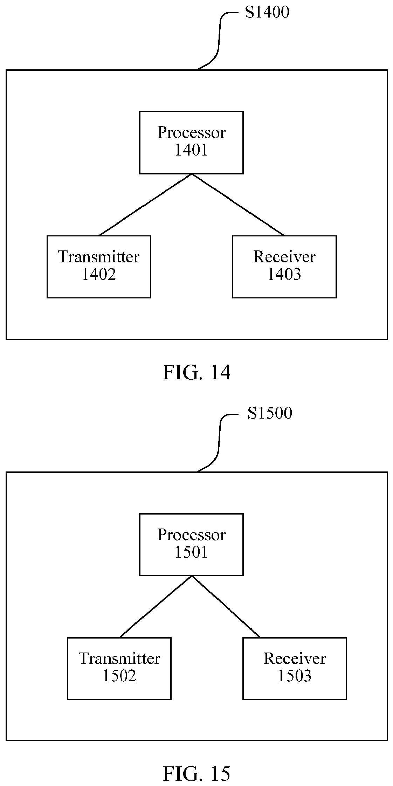

With reference to FIG. 14, an embodiment of the present invention further provides a data transmission device 1400. The data transmission device is separately connected to a multiple hosts and one or more input/output I/O devices. The multiple hosts share the one or more I/O devices. The one or more I/O devices access respective DMA memory addresses of the multiple hosts in a direct memory access DMA manner. A structure of the apparatus includes a processor 1401. The processor is configured to support the apparatus to execute the corresponding method executed by the data transmission device in the foregoing embodiment. The structure of the apparatus further includes a transmitter 1402 and a receiver 1403 that are configured to send or receive an instruction or information exchanged between another device and the data transmission devices in the foregoing embodiment. The apparatus may further include a storage, where the storage is configured to be coupled with the processor, and the storage saves necessary program instructions and data.

With reference to FIG. 15, an embodiment of the present invention further provides a computer apparatus 1500. The computer apparatus is connected to the data transmission devices, so as to share one or more I/O devices with multiple other computer apparatuses. The one or more I/O devices access respective DMA memory addresses of multiple hosts in a direct memory access DMA manner. A structure of the apparatus includes a processor 1501. The processor is configured to support the apparatus to execute the corresponding method executed by the host in the foregoing embodiment. The structure of the apparatus further includes a transmitter 1502 and a receiver 1503 that are configured to send or receive an instruction or information exchanged between another device and the data transmission devices in the foregoing embodiment. The apparatus may further include a storage, where the storage is configured to be coupled with the processor, and the storage saves necessary program instructions and data.

A person of ordinary skill in the art may understand that all or some of the steps of the methods in the embodiments may be implemented by a program instructing relevant hardware. The program may be stored in a computer readable storage medium. The storage medium may include: a ROM, a RAM, a magnetic disk, or an optical disc.

## Claims

1. A data transmission method, wherein the method is applied to a computer system in which multiple hosts share one or more input/output I/O devices, the one or more I/O devices access respective DMA memory addresses of the multiple hosts in a direct memory access DMA manner, the DMA memory addresses are mapped, in a one-to-one manner, to virtual addresses in a global virtual address space, and the method comprises:
obtaining (S401) a DMA packet sent by the I/O device, wherein the DMA packet carries a DMA virtual address, and the DMA virtual address is a virtual address in the global virtual address space;
determining (S402), according to a correspondence among DMA virtual addresses, DMA memory addresses, and hosts, a DMA memory address and a target host that correspond to the DMA virtual address by querying a correspondence table, wherein the DMA memory address is a DMA memory address mapped to the DMA virtual address, and the target host is a host to which the DMA memory address mapped to the DMA virtual address belongs, and the correspondence among DMA virtual addresses, DMA memory addresses, and hosts comprises: the DMA memory addresses of the multiple hosts form multiple DMA memory address intervals, and each host corresponds to one or more DMA memory address intervals; the global virtual address space comprises multiple non-overlapping virtual address intervals, the multiple virtual address intervals correspond to the multiple DMA memory address intervals in a one-to-one manner, and virtual addresses in a virtual address interval correspond to DMA memory addresses in a corresponding DMA memory address interval in a one-to-one manner;
modifying (S403) the DMA virtual address in the DMA packet to the DMA memory address mapped to the DMA virtual address; and
sending (S403) the modified DMA packet to the target host,
wherein the determining (S402), according to a correspondence among DMA virtual addresses, DMA memory addresses, and hosts, a DMA memory address and a target host that correspond to the DMA virtual address comprises:
determining, according to a virtual address interval to which the DMA virtual address belongs, a DMA memory address interval corresponding to the virtual address interval; and
determining, according to the DMA memory address interval, a host corresponding to the DMA memory address interval and a DMA memory address that is in the DMA memory address interval and that is mapped to the DMA virtual address.

2. The method according to claim 1, wherein the method further comprises: after determining the DMA memory address and the target host that correspond to the DMA virtual address, determining, according to permission information of the DMA packet and a permission requirement of the target host, whether a DMA operation to be performed on the target host meets the permission requirement; and if the DMA operation meets the permission requirement, modifying the DMA virtual address in the DMA packet to the DMA memory address of the target host of the DMA operation.

3. The method according to claim 2, wherein the permission information of the DMA packet comprises at least one of the following information: a type of the DMA packet, a permission identifier of the DMA packet, or an identifier of a host sending the DMA packet.

4. The method according to any one of claims 1 to 3, wherein the method further comprises: receiving a DMA operation starting request, wherein the DMA operation starting request carries the DMA memory address of the target host; determining, according to the correspondence among DMA virtual addresses, DMA memory addresses, and hosts, a DMA virtual address corresponding to the DMA memory address carried in the DMA operation starting request, and modifying the DMA memory address carried in the DMA operation starting request to the DMA virtual address; and sending the modified DMA operation starting request to the I/O device.

5. A data transmission device, wherein the data transmission device is separately connected to multiple hosts and one or more input/output I/O devices, and the device comprises:
a receiving module (1002), configured to obtain a DMA packet sent by the I/O device, wherein the DMA packet carries a DMA virtual address, and the DMA virtual address is a virtual address in the global virtual address space, DMA memory addresses are mapped, in a one-to-one manner, to virtual addresses in the global virtual address space;
a translation module (1003), configured to determine, according to a correspondence among DMA virtual addresses, DMA memory addresses, and hosts, a DMA memory address and a target host that correspond to the DMA virtual address by querying a correspondence table, wherein the DMA memory address is a DMA memory address mapped to the DMA virtual address, and the target host is a host to which the DMA memory address mapped to the DMA virtual address belongs and the correspondence among DMA virtual addresses, DMA memory addresses, and hosts comprises: the DMA memory addresses of the multiple hosts form multiple DMA memory address intervals, and each host corresponds to one or more DMA memory address intervals; the global virtual address space comprises multiple non-overlapping virtual address intervals, the multiple virtual address intervals correspond to the multiple DMA memory address intervals in a one-to-one manner, and virtual addresses in a virtual address interval correspond to DMA memory addresses in a corresponding DMA memory address interval in a one-to-one manner; and modify the DMA virtual address in the DMA packet to the DMA memory address mapped to the DMA virtual address; and
a sending module (1004), configured to send the modified DMA packet to the target host,
wherein the determining a DMA memory address and a target host that correspond to the DMA virtual address comprises: determining, according to a virtual address interval to which the DMA virtual address belongs, a DMA memory address interval corresponding to the virtual address interval; and determining, according to the DMA memory address interval, a host corresponding to the DMA memory address interval and a DMA memory address that is in the DMA memory address interval and that is mapped to the DMA virtual address.

6. The device according to claim 5, wherein the translation module (1003) is further configured to: after determining the DMA memory address and the target host that correspond to the DMA virtual address, determine, according to permission information of the DMA packet and a permission requirement of the target host, whether a DMA operation to be performed on the target host meets the permission requirement; and if the DMA operation meets the permission requirement, modify the DMA virtual address in the DMA packet to the DMA memory address of the target host of the DMA operation.

7. The device according to claim 6, wherein the permission information of the DMA packet comprises at least one of the following information: a type of the DMA packet, a permission identifier of the DMA packet, or an identifier of a host sending the DMA packet.

8. The device according to claim 6 or 7, wherein
the receiving module (1002) is further configured to receive DMA operation starting request, wherein the DMA operation starting request carries the DMA memory address of the target host, and the DMA operation starting request is used to instruct the I/O device to perform the DMA operation on the target host;
the translation module (1003) is further configured to: determine, according to the correspondence among DMA virtual addresses, DMA memory addresses, and hosts, a DMA virtual address corresponding to the DMA memory address carried in the DMA operation starting request, and modify the DMA memory address carried in the DMA operation starting request to the DMA virtual address; and
the sending module (1004) is further configured to send the modified DMA operation starting request to the I/O device.

9. A computer device, wherein the computer device comprise a data transmission device according to any one of claims 5-8, and one or more input/output I/O devices.

## Patentansprüche

1. Datenübertragungsverfahren, wobei das Verfahren in einem Computersystem angewandt wird, in dem mehrere Hosts eine oder mehrere Eingangs-/Ausgangsvorrichtungen, E/A-Vorrichtungen, gemeinsam nutzen, wobei die eine oder mehreren E/A-Vorrichtungen auf entsprechende DMA-Speicheradressen der mehreren Hosts in einer direkten Speicherzugriffsweise (Direct Memory Access manner, DMA-Weise) zugreifen, wobei die DMA-Speicheradressen virtuellen Adressen in einem globalen virtuellen Adressraum in einer Eins-zu-Eins-Weise zugeordnet sind, und wobei das Verfahren umfasst:
Erhalten (S401) eines DMA-Datenpakets, das von der E/A-Vorrichtung gesendet wird, wobei das DMA-Datenpaket eine virtuelle DMA-Adresse mitführt, und wobei die virtuelle DMA-Adresse eine virtuelle Adresse in dem globalen virtuellen Adressraum ist;
Ermitteln (S402), gemäß einer Entsprechung zwischen virtuellen DMA-Adressen, DMA-Speicheradressen und Hosts, einer DMA-Speicheradresse und eines Ziel-Hosts, welcher der virtuellen DMA-Adresse entspricht, indem eine Entsprechungstabelle abgefragt wird, wobei die DMA-Speicheradresse eine DMA-Speicheradresse ist, die der virtuellen DMA-Adresse zugeordnet ist, und wobei der Ziel-Host ein Host ist, zu dem die DMA-Speicheradresse gehört, die der virtuellen DMA-Adresse zugeordnet ist, und wobei die Entsprechung zwischen den virtuellen DMA-Adressen, den DMA-Speicheradressen und den Hosts umfasst, dass: die DMA-Speicheradressen der mehreren Hosts mehrere DMA-Speicheradressintervalle bilden, und jeder Host einem oder mehreren DMA-Speicheradressintervallen entspricht; wobei der globale virtuelle Adressraum mehrere nicht überlappende virtuelle Adressintervalle umfasst, wobei die mehreren virtuellen Adressintervalle den mehreren DMA-Speicheradressintervallen in einer Eins-zu-Eins-Weise entsprechen, und wobei die virtuellen Adressen in einem virtuellen Adressintervall den DMA-Speicheradressen in einem entsprechenden DMA-Speicheradressintervall in einer Eins-zu-Eins-Weise entsprechen;
Modifizieren (S403) der virtuellen DMA-Adresse in dem DMA-Datenpaket auf die DMA-Speicheradresse, die der virtuellen DMA-Adresse zugeordnet ist; und
Senden (S403) des modifizierten DMA-Datenpakets zu dem Ziel-Host,
wobei das Ermitteln (S402), gemäß einer Entsprechung zwischen virtuellen DMA-Adressen, DMA-Speicheradressen und Hosts, einer DMA-Speicheradresse und eines Ziel-Hosts, welcher der virtuellen DMA-Adresse entspricht, umfasst:
Ermitteln, gemäß einem virtuellen Adressintervall, zu dem die virtuelle DMA-Adresse gehört, eines DMA-Speicheradressintervalls, das dem virtuellen Adressintervall entspricht; und
Ermitteln, gemäß dem DMA-Speicheradressintervall, eines Hosts, der dem DMA-Speicheradressintervall entspricht, und einer DMA-Speicheradresse, die sich in dem DMA-Speicheradressintervall befindet und die der virtuellen DMA-Adresse zugeordnet ist.

2. Verfahren nach Anspruch 1, wobei das Verfahren außerdem umfasst: nach dem Ermitteln der DMA-Speicheradresse und des Ziel-Hosts, welcher der virtuellen DMA-Adresse entspricht, Ermitteln, gemäß Erlaubnisinformationen des DMA-Datenpakets und einer Erlaubnisanforderung des Ziel-Hosts, ob eine DMA-Operation, die an dem Ziel-Host durchzuführen ist, die Erlaubnisanforderung erfüllt; und wenn die DMA-Operation die Erlaubnisanforderung erfüllt, Modifizieren der virtuellen DMA-Adresse in dem DMA-Datenpaket auf die DMA-Speicheradresse des Ziel-Hosts der DMA-Operation.

3. Verfahren nach Anspruch 2, wobei die Erlaubnisinformationen des DMA-Datenpakets mindestens eine der folgenden Informationen umfassen: einen Typ des DMA-Datenpakets, eine Erlaubniskennung des DMA-Datenpakets, oder eine Kennung eines Hosts, der das DMA-Datenpaket sendet.

4. Verfahren nach einem der Ansprüche 1 bis 3, wobei das Verfahren außerdem umfasst: Empfangen einer DMA-Operationstartanfrage, wobei die DMA-Operationstartanfrage die DMA-Speicheradresse des Ziel-Hosts mitführt, Ermitteln, gemäß der Entsprechung zwischen den virtuellen DMA-Adressen, den DMA-Speicheradressen und den Hosts, einer virtuellen DMA-Adresse, die der DMA-Speicheradresse entspricht, die in der DMA-Operationstartanfrage mitgeführt wird, und Modifizieren der DMA-Speicheradresse, die in der DMA-Operationstartanfrage mitgeführt wird, auf die virtuelle DMA-Adresse; und Senden der modifizierten DMA-Operationstartanfrage an die E/A-Vorrichtung.

5. Datenübertragungsvorrichtung, wobei die Datenübertragungsvorrichtung separat mit mehreren Hosts und einer oder mehreren Eingangs-/Ausgangsvorrichtungen, E/A-Vorrichtungen verbunden ist und wobei die Vorrichtung umfasst:
ein Empfangsmodul (1002), das konfiguriert ist zum Erhalten eines DMA-Datenpakets, das von der E/A-Vorrichtung gesendet wird, wobei das DMA-Datenpaket eine virtuelle DMA-Adresse mitführt, und wobei die virtuelle DMA-Adresse eine virtuelle Adresse in dem globalen virtuellen Adressraum ist, wobei die DMA-Speicheradressen virtuellen Adressen in dem globalen virtuellen Adressraum in einer Eins-zu-Eins-Weise zugeordnet sind;
ein Umwandlungsmodul (1003), das konfiguriert ist zum Ermitteln, gemäß einer Entsprechung zwischen virtuellen DMA-Adressen, DMA-Speicheradressen und Hosts, einer DMA-Speicheradresse und eines Ziel-Hosts, welcher der virtuellen DMA-Adresse entspricht, indem eine Entsprechungstabelle abgefragt wird, wobei die DMA-Speicheradresse eine DMA-Speicheradresse ist, die der virtuellen DMA-Adresse zugeordnet ist, und wobei der Ziel-Host ein Host ist, zu dem die DMA-Speicheradresse gehört, die der virtuellen DMA-Adresse zugeordnet ist, und wobei die Entsprechung zwischen den virtuellen DMA-Adressen, den DMA-Speicheradressen und den Hosts umfasst dass:
die DMA-Speicheradressen der mehreren Hosts mehrere DMA-Speicheradressintervalle bilden, und jeder Host einem oder mehreren DMA-Speicheradressintervallen entspricht; wobei der globale virtuelle Adressraum mehrere nicht überlappende virtuelle Adressintervalle umfasst, wobei die mehreren virtuellen Adressintervalle den mehreren DMA-Speicheradressintervallen in einer Eins-zu-Eins-Weise entsprechen, und wobei die virtuellen Adressen in einem virtuellen Adressintervall den DMA-Speicheradressen in einem entsprechenden DMA-Speicheradressintervall in einer Eins-zu-Eins-Weise entsprechen; und Modifizieren der virtuellen DMA-Adresse in dem DMA-Datenpaket auf die DMA-Speicheradresse, die der virtuellen DMA-Adresse zugeordnet ist; und
ein Sendemodul (1004), das konfiguriert ist zum Senden des modifizierten DMA-Datenpakets zu dem Ziel-Host,
wobei das Ermitteln einer DMA-Speicheradresse und eines Ziel-Hosts, welcher der virtuellen DMA-Adresse entspricht, umfasst: Ermitteln, gemäß einem virtuellen Adressintervall, zu dem die virtuelle DMA-Adresse gehört, eines DMA-Speicheradressintervalls, das dem virtuellen Adressintervall entspricht; und Ermitteln, gemäß dem DMA-Speicheradressintervall, eines Hosts, der dem DMA-Speicheradressintervall entspricht, und einer DMA-Speicheradresse, die sich in dem DMA-Speicheradressintervall befindet und die der virtuellen DMA-Adresse zugeordnet ist.

6. Vorrichtung nach Anspruch 5, wobei das Umwandlungsmodul (1003) außerdem konfiguriert ist zum: nach dem Ermitteln der DMA-Speicheradresse und des Ziel-Hosts, welcher der virtuellen DMA-Adresse entspricht, Ermitteln, gemäß Erlaubnisinformationen des DMA-Datenpakets und einer Erlaubnisanforderung des Ziel-Hosts, ob eine DMA-Operation, die an dem Ziel-Host durchzuführen ist, die Erlaubnisanforderung erfüllt, und wenn die DMA-Operation die Erlaubnisanforderung erfüllt, Modifizieren der virtuellen DMA-Adresse in dem DMA-Datenpaket auf die DMA-Speicheradresse des Ziel-Hosts der DMA-Operation.

7. Vorrichtung nach Anspruch 6, wobei die Erlaubnisinformationen des DMA-Datenpakets mindestens eine der folgenden Informationen umfassen: einen Typ des DMA-Datenpakets, eine Erlaubniskennung des DMA-Datenpakets, oder eine Kennung eines Hosts, der das DMA-Datenpaket sendet.

8. Vorrichtung nach Anspruch 6 oder 7, wobei:
das Empfangsmodul (1002) außerdem konfiguriert ist zum Empfangen einer DMA-Operationstartanfrage, wobei die DMA-Operationstartanfrage die DMA-Speicheradresse des Ziel-Hosts mitführt; und wobei die DMA-Operationstartanfrage verwendet wird, um die E/A-Vorrichtung anzuweisen, die DMA-Operation an dem Ziel-Host durchzuführen;
das Umwandlungsmodul (1003) außerdem konfiguriert ist zum: Ermitteln, gemäß der Entsprechung zwischen den virtuellen DMA-Adressen, den DMA-Speicheradressen und den Hosts, einer virtuellen DMA-Adresse, die der DMA-Speicheradresse entspricht, die in der DMA-Operationstartanfrage mitgeführt wird, und Modifizieren der DMA-Speicheradresse, die in der DMA-Operationstartanfrage mitgeführt wird, auf die virtuelle DMA-Adresse; und
das Sendemodul (1004) außerdem konfiguriert ist zum Senden der modifizierten DMA-Operationstartanfrage an die E/A-Vorrichtung.

9. Computervorrichtung, wobei die Computervorrichtung eine Datenübertragungsvorrichtung nach einem der Ansprüche 5 bis 8 und eine oder mehrere E/A-Vorrichtungen umfasst.

## Revendications

1. Procédé de transmission de données, le procédé étant appliqué à un système informatique dans lequel de multiples hôtes partagent un ou plusieurs dispositifs d'entrée/sortie E/S, les un ou plusieurs dispositifs d'E/S accédant à des adresses mémoire DMA respectives des multiples hôtes selon un accès direct à la mémoire DMA, les adresses mémoire DMA étant mappées, de manière biunivoque, sur des adresses virtuelles dans un espace d'adressage virtuel global, et le procédé comprenant :
l'obtention (S401) d'un paquet DMA envoyé par le dispositif d'E/S, le paquet DMA convoyant une adresse virtuelle DMA, et l'adresse virtuelle DMA étant une adresse virtuelle dans l'espace d'adressage virtuel global ;
la détermination (S402), selon une correspondance entre des adresses virtuelles DMA, des adresses mémoire DMA et des hôtes, d'une adresse mémoire DMA et d'un hôte cible qui correspondent à l'adresse virtuelle DMA en interrogeant une table de correspondance, dans lequel l'adresse mémoire DMA est une adresse mémoire DMA mappée sur l'adresse virtuelle DMA, et l'hôte cible est un hôte auquel appartient l'adresse mémoire DMA mappée sur l'adresse virtuelle DMA, et la correspondance entre des adresses virtuelles DMA, des adresses mémoire DMA et des hôtes comprend : les adresses mémoire DMA des multiples hôtes forment de multiples intervalles d'adresses mémoire DMA, et chaque hôte correspond à un ou plusieurs intervalles d'adresses mémoire DMA ; l'espace d'adressage virtuel global comprend de multiples intervalles d'adresses virtuelles qui ne se chevauchent pas, les multiples intervalles d'adresses virtuelles correspondent aux multiples intervalles d'adresses mémoire DMA de manière biunivoque, et les adresses virtuelles dans un intervalle d'adresse virtuelle correspondent aux adresses mémoire DMA dans un intervalle d'adresse mémoire DMA correspondant de manière biunivoque ;
la modification (S403) de l'adresse virtuelle DMA dans le paquet DMA en l'adresse mémoire DMA mappée sur l'adresse virtuelle DMA ; et
l'envoi (S403) du paquet DMA modifié à l'hôte cible,
dans lequel la détermination (S402), selon une correspondance entre des adresses virtuelles DMA, des adresses mémoire DMA et des hôtes, d'une adresse mémoire DMA et d'un hôte cible qui correspondent à l'adresse virtuelle DMA comprend :
la détermination, selon un intervalle d'adresse virtuelle auquel appartient l'adresse virtuelle DMA, d'un intervalle d'adresse mémoire DMA correspondant à l'intervalle d'adresse virtuelle ; et
la détermination, en fonction de l'intervalle d'adresse mémoire DMA, d'un hôte correspondant à l'intervalle d'adresse mémoire DMA et d'une adresse mémoire DMA qui se trouve dans l'intervalle d'adresse mémoire DMA et qui est mappée sur l'adresse virtuelle DMA.

2. Procédé selon la revendication 1, le procédé comprenant en outre : après la détermination de l'adresse mémoire DMA et de l'hôte cible qui correspondent à l'adresse virtuelle DMA, la détermination, en fonction d'informations de permission du paquet DMA et d'une exigence de permission de l'hôte cible, si une opération DMA à réaliser sur l'hôte cible satisfait ou non l'exigence de permission ; et si l'opération DMA satisfait l'exigence de permission, la modification de l'adresse virtuelle DMA dans le paquet DMA en l'adresse mémoire DMA de l'hôte cible de l'opération DMA.

3. Procédé selon la revendication 2, dans lequel les informations de permission du paquet DMA comprennent au moins une des informations suivantes : un type de paquet DMA, un identifiant de permission du paquet DMA, ou un identifiant d'un hôte envoyant le paquet DMA.

4. Procédé selon l'une quelconque des revendications 1 à 3, le procédé comprenant en outre : la réception d'une demande de démarrage d'opération DMA, la demande de démarrage d'opération DMA convoyant l'adresse mémoire DMA de l'hôte cible ; la détermination, en fonction de la correspondance entre des adresses virtuelles DMA, des adresses mémoire DMA et des hôtes, d'une adresse virtuelle DMA correspondant à l'adresse mémoire DMA convoyée dans la demande de démarrage d'opération DMA, et la modification de l'adresse mémoire DMA convoyée dans la demande de démarrage d'opération DMA en l'adresse virtuelle DMA ; et l'envoi de la demande de démarrage d'opération DMA modifiée au dispositif d'E/S.

5. Dispositif de transmission de données, le dispositif de transmission de données étant connecté séparément à de multiples hôtes et à un ou plusieurs dispositifs d'entrée/sortie E/S, et le dispositif comprenant :
un module de réception (1002), configuré pour obtenir un paquet DMA envoyé par le dispositif d'E/S, le paquet DMA convoyant une adresse virtuelle DMA, et l'adresse virtuelle DMA étant une adresse virtuelle dans l'espace d'adressage virtuel global, les adresses mémoire DMA sont mappées, de manière biunivoque, sur des adresses virtuelles dans l'espace d'adressage virtuel global ;
un module de traduction (1003), configuré pour déterminer, en fonction d'une correspondance entre des adresses virtuelles DMA, des adresses mémoire DMA et des hôtes, une adresse mémoire DMA et un hôte cible qui correspondent à l'adresse virtuelle DMA en interrogeant une table de correspondance, dans lequel l'adresse mémoire DMA est une adresse mémoire DMA mappée sur l'adresse virtuelle DMA, et l'hôte cible est un hôte auquel appartient l'adresse mémoire DMA mappée sur l'adresse virtuelle DMA et la correspondance entre des adresses virtuelles DMA, des adresses mémoire DMA et des hôtes comprend : les adresses mémoire DMA des multiples hôtes forment de multiples intervalles d'adresses mémoire DMA, et chaque hôte correspond à un ou plusieurs intervalles d'adresses mémoire DMA ; l'espace d'adressage virtuel global comprend de multiples intervalles d'adresses virtuelles qui ne se chevauchent pas, les multiples intervalles d'adresses virtuelles correspondent aux multiples intervalles d'adresses mémoire DMA de manière biunivoque et les adresses virtuelles dans un intervalle d'adresse virtuelle correspondent aux adresses mémoire DMA dans un intervalle d'adresse mémoire DMA correspondant de manière biunivoque ; et modifier l'adresse virtuelle DMA dans le paquet DMA en l'adresse mémoire DMA mappée sur l'adresse virtuelle DMA ; et
un module d'envoi (1004), configuré pour envoyer le paquet DMA modifié à l'hôte cible,
dans lequel la détermination d'une adresse mémoire DMA et d'un hôte cible qui correspondent à l'adresse virtuelle DMA comprend : la détermination, selon un intervalle d'adresse virtuelle auquel appartient l'adresse virtuelle DMA, d'un intervalle d'adresse mémoire DMA correspondant à l'intervalle d'adresse virtuelle ; et la détermination, en fonction de l'intervalle d'adresse mémoire DMA, d'un hôte correspondant à l'intervalle d'adresse mémoire DMA et d'une adresse mémoire DMA qui se trouve dans l'intervalle d'adresse mémoire DMA et qui est mappée sur l'adresse virtuelle DMA.

6. Dispositif selon la revendication 5, dans lequel le module de traduction (1003) est configuré en outre pour : après avoir déterminé l'adresse mémoire DMA et l'hôte cible qui correspondent à l'adresse virtuelle DMA, déterminer, en fonction d'informations de permission du paquet DMA et d'une exigence de permission de l'hôte cible, si une opération DMA à réaliser sur l'hôte cible satisfait ou non l'exigence de permission ; et si l'opération DMA satisfait l'exigence d'autorisation, modifier l'adresse virtuelle DMA dans le paquet DMA en l'adresse mémoire DMA de l'hôte cible de l'opération DMA.

7. Dispositif selon la revendication 6, dans lequel les informations de permission du paquet DMA comprennent au moins une des informations suivantes : un type de paquet DMA, un identifiant de permission du paquet DMA, ou un identifiant d'un hôte envoyant le paquet DMA.

8. Dispositif selon la revendication 6 ou 7, dans lequel
le module de réception (1002) est configuré en outre pour recevoir une demande de démarrage d'opération DMA, dans lequel la demande de démarrage d'opération DMA convoie l'adresse mémoire DMA de l'hôte cible et la demande de démarrage d'opération DMA est utilisée pour donner pour instruction au dispositif d'E/S de réaliser l'opération DMA sur l'hôte cible ;
le module de traduction (1003) est configuré en outre pour : déterminer, en fonction de la correspondance entre des adresses virtuelles DMA, des adresses mémoire DMA et des hôtes, une adresse virtuelle DMA correspondant à l'adresse mémoire DMA convoyée dans la demande de démarrage d'opération DMA, et modifier l'adresse mémoire DMA convoyée dans la demande de démarrage d'opération DMA en l'adresse virtuelle DMA ; et
le module d'envoi (1004) est configuré en outre pour envoyer la demande de démarrage d'opération DMA modifiée au dispositif d'E/S.

9. Dispositif informatique, le dispositif informatique comprenant un dispositif de transmission de données selon l'une quelconque des revendications 5-8, et un ou plusieurs dispositifs d'entrée/sortie E/S.
